Europäisches Patentamt

European Patent Office

Office européen des brevets

(11) Publication number: **0 164 677**
**B1**

(12) **EUROPEAN PATENT SPECIFICATION**

(45) Date of publication of patent specification: **18.10.89**

(51) Int. Cl.⁴: **G 10 L 9/18**

(21) Application number: **85106852.8**

(22) Date of filing: **27.01.81**

(60) Publication number of the earlier application in accordance with Art. 76 EPC: **0 033 510**

(54) Speech synthesis system.

(30) Priority: **04.02.80 US 118139**
**04.02.80 US 118366**
**04.02.80 US 118156**
**04.02.80 US 118155**
**04.02.80 US 118255**
**04.02.80 US 118367**
**04.02.80 US 118138**

(43) Date of publication of application:
**18.12.85 Bulletin 85/51**

(45) Publication of the grant of the patent:
**18.10.89 Bulletin 89/42**

(84) Designated Contracting States:
**DE FR GB IT NL**

(56) References cited:
**DE-A-2 804 721**
**DE-A-2 917 161**
**GB-A-2 014 765**

(73) Proprietor: **TEXAS INSTRUMENTS INCORPORATED**
**13500 North Central Expressway**
**Dallas Texas 75265 (US)**

(72) Inventor: **Henderson, Alva E.**
**5610 70th Street**
**Lubbock, Texas 79424 (US)**
Inventor: **Wiggins, Richard H.**
**6931 Mill Falls**
**Dallas, Texas 75248 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

(56) References cited:
**JOURNAL OF THE ACOUSTICAL SOCIETY OF AMERICA, vol. 56, supplement, 1974, page S15, abstract H3, New York, US; R. VISWANATHAN et al.: "Towards a minimally redundant linear predictive vocoder"**

**IEEE TRANSACTIONS ON ACOUSTICS, SPEECH, AND SIGNAL PROCESSING, vol. ASSP-25, no. 4, August 1977, pages 322-330, New York, US; S. CHANDRA et al.: "Linear prediction with a variable analysis frame size"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 164 677 B1

**Description**

This application is a division from patent application EP—A—33 510.

The invention described herein relates to a speech synthesis system as defined in the pre-characterizing part of claim 1. More specifically, this invention relates to the following aspects of a speech synthesis system:

interpolation circuitry utilized to increase the effective data rate in speech synthesis circuits; and data frame rate control in speech synthesis circuits.

Several techniques are known in the prior art for digitizing human speech. For example, pulse code modulation, differential pulse code modulation, adaptive predictive coding, delta modulation, channel vocoders, cepstrum vocoders, formant vocoders, voice excited vocoders, and linear predictive coding techniques of speech digitization are known. The techniques are briefly explained in "Voice Signals; Bit by Bit" on pages 28—34 of the October, 1973 issue of *IEEE Spectrum*.

In certain applications and particularly those in which digitized speech is to be stored in a memory, most researchers tend to use the linear predictive coding technique because it produces a very high quality speech using rather low data rates. A speech synthesis system employing the linear predictive coding technique would typically utilize frames of data which are comprised of digital representations of pitch, energy, and certain linear predictive coefficients which are utilized to control a digital filter. High quality synthetic human speech may be produced by such a speech synthesis system at a relatively low data rate, such as 1,200 bits per second, ultilizing a fixed rate of data frame entry. It will be appreciated that a more accurate representation of human speech may be obtained by increasing the frame rate to a significantly higher level. However, such an increase in the frame rate is accompanied by a corresponding increase in the number of bits which must be stored in memory to synthesize a given quantity of human speech. Further, because certain aspects of human speech are quite redundant, accurate synthesization of such redundant human speech can be achieved by utilizing a data rate significantly lower than that which would be normally employed. An ideal solution to the aforementioned problem, would require a speech synthesis system capable of synthesizing human speech from frames of data which change rapidly during those complex periods of human speech and change slowly during redundant periods, thereby minimizing the required bit storage.

A problem encountered in attempting to utilize variable frame rate data in speech synthesis circuits occurs when interpolation calculation is utilized between frames of data to enhance data rate capability. A fixed interpolation system wherein eight interpolation calculations take place between each frame of data is adequate for fixed frame rate systems; however, a variable frame rate system requires much more sophistication in interpolation circuitry. Specifically, during slowly changing periods of speech data, a more accurate portrayal of the human speech waveform may be achieved by increasing the number of interpolation steps between frames. Conversely, during rapidly changing aspects of human speech, few or no interpolations between frames of data are required to accurately synthesize human speech. Thus, in order to solve the aforementioned problem, a speech synthesis circuit must be able to vary the number of interpolation calculations taken between successive frames of speech data. Further, it has been discovered that in certain aspects of synthesis of human speech, the interpolation between frames of data may more accurately portray human speech if interpolated linearly, or in other circumstances, non-linear interpolation may provide greater accuracy.

In accordance with one aspect of the invention, a speech synthesis system is constructed with a linear predictive filter utilizing coded reflection coefficients to produce digital signals representative of human speech. A variable interpolation circuit within the linear predictive filter allows a variable number of interpolation steps to be calculated between successive values of reflection coefficients. Additionally, a user programmable option allows the user to select a linear, nonlinear, or combination form of interpolation.

As previously described, speech synthesis if carried out at an increased data rate would typically require a corresponding increase in the number of bits to be stored in a memory to synthesize a given quantity of human speech. To reduce the bit storage requirements of the memory while maintaining the capability of speech synthesis at a relatively high data rate is the subject of two papers delivered at the 1977 IEEE Conference on Acoustics, Speech and Signal Processing, and published in the record thereof. One attempted solution was suggested in "Variable-to-Fixed Rate Conversion of Narrowband LPC Speech" by E. Blackman, R. Viswanathan and J. Makhoul. The aforementioned solution required transmission of pitch, gain and reflection coefficients in three separate variable rates, with separate transmission criterion and a three bit header code to distinguish transmissions. Additionally, transmit and receive buffers were necessary in that system to convert the transmission back into a fixed rate signal. The second attempted solution was documented in a paper entitled "The Application of a Functional/Perceptual Model of Speech to Variable-Rate LPC Systems" by R. Visanwanthan, J. Makhoul and R. Wicks. This second solution involved the transmission of pitch and gain information at a fixed frame rate, and utilizing a variable frame rate for transmission of reflection coefficients.

The above described problems are overcome in a speech synthesis system of the type defined in the pre-characterizing part of claim 1 by incorporating the features of the characterizing part thereof.

The novel features believed characteristic of the invention are set forth in the appended claims. The

2

EP 0 164 677 B1

invention itself, however, as well as a preferred mode of use, further objects and advantages thereof, will best be understood by reference to the following detailed description of an illustrative embodiment when read in conjunction with the accompanying drawings, wherein:

Figure 1a is a view of an electronic learning aid which is a suitable structure for enclosing the speech synthesizer system;

Figure 1b is a generalized block diagram of a speech synthesis system;

Figures 2a and 2b form a detailed block diagram of the speech synthesizer;

Figure 3 is a logic diagram of the input data register and frame control PLA;

Figure 4 is a logic diagram of the interpolation counter circuitry;

Figure 5 is a detailed logic diagram of the speak latch circuitry and status latch circuitry.

Figure 6 is a detailed logic diagram of the instruction decoder circuitry.

Figure 7 is a detailed logic diagram of the parameter load control circuitry.

Figures 8a and 8b form a composite block diagram of the array multiplier;

Figures 9a—9d are detailed logic diagrams of the blocks which form the array multiplier.

Figures 10a—10c are detailed logic diagrams of the recoding logic;

Figure 11 is a detailed logic diagram of the filter adder;

Figure 12 is a detailed logic diagram of one cell of the B-Stack, PPC, Y Latch register;

Figure 13 is a detailed logic diagram of multiplex 58 and register 66;

Figures 14a and 14b are detailed logic diagrams of the digital-to-analog and output circuitry.

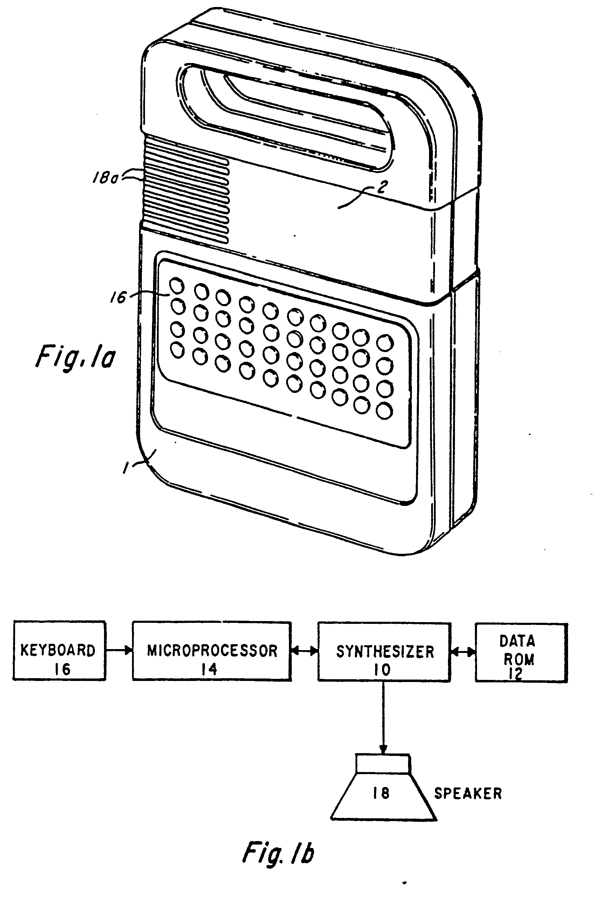

Referring to Figure 1a, there is shown an electronic learning aid which may serve as a suitable structure for enclosing the speech synthesis system of the present invention. Figure 1b shows a generalized block diagram of the major components which make up such a learning aid. Keyboard 16 may be a standard matrix keyboard such as the type disclosed in U.S. Patent No. 4,074,055. Various algorithms required to implement the desired modes of operation of an electronic learning aid, electronic language translator or other applications may be programmed into the microprocessor in a manner well known in the art. An example of one such algorithm may be seen in US—A—4 209 836.

Data ROM 12 is a standard non-volatile Read Only Memory such as is described in US—A—4 209 836. The coded or uncoded filter parameters which are utilized to control synthesizer 10 are stored therein. Synthesizer 10 is a linear predictive filter type synthesizer such as is described in DE—A 28 26 570; however, improvements in the synthesizer circuitry which result in higher quality speech, lower data rates and smaller circuit size are incorporated herein. Synthesizer 10 is controlled by microprocessor 14, and generates synthetic speech at speaker 18 by utilization of certain filter parameters stored in ROM 12. While synthesizer 10 is shown being controlled by microprocessor 14, it will be understood by those skilled in the art that any digital control mechanism may control synthesizer 10. In an embodiment disclosed herein, in which synthesizer 10 is implemented in complementary MIS, such as CMOS, it is preferable that microprocessor 14 also be implemented in CMOS to permit both devices to be operated from a single low voltage source, such as a battery. The linear predictive filter utilized in synthesizer 10 is a single multiplier, lattice type filter similar to the filter described in DE—A—28 26 570. The reader is encouraged to read the aforementioned German Patent Application to familarize himself with the basic operation of this complex circuitry.

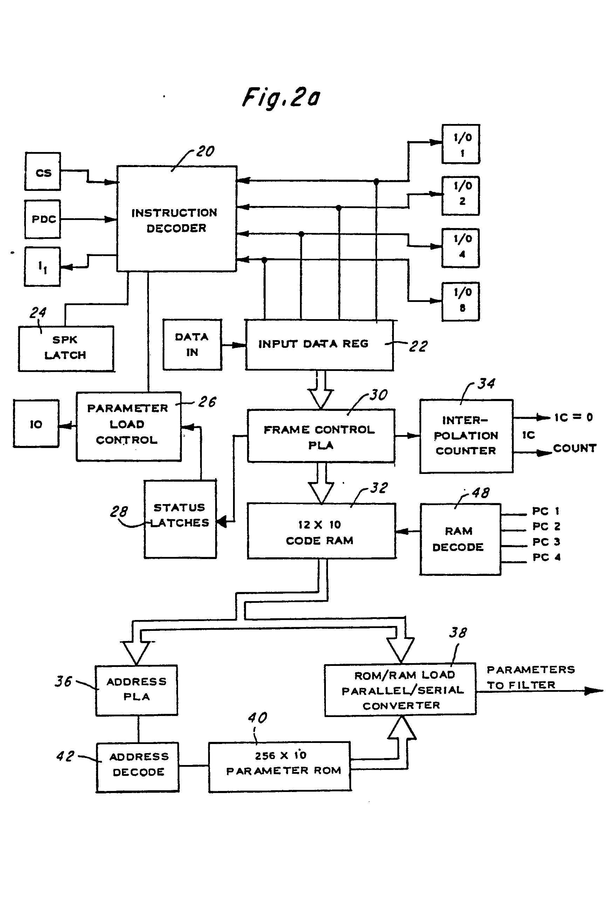

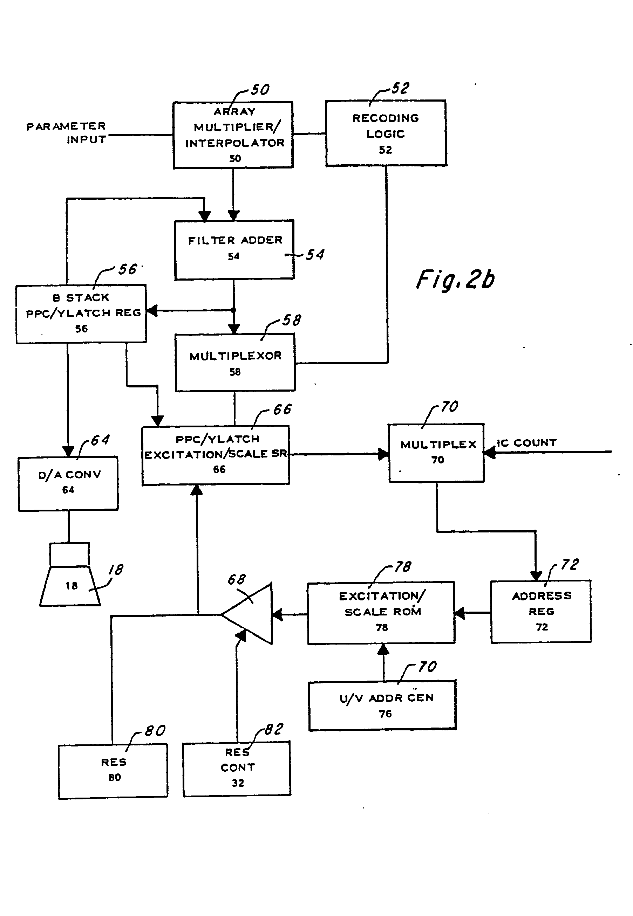

Referring to Figures 2a and 2b, there is shown a detailed block diagram of synthesizer 10. Most of the blocks of Figures 2a and 2b are shown in greater detail in later figures.

Speech data, comprising either coded or uncoded filter coefficients, is received by synthesizer 10 from ROM 12 at the Data In pad of input register 22, input register 22 is a ten bit register latch which accepts the speech data serially and outputs the data in parallel to frame control PLA 30.

Input/output pads 1, 2, 4 and 8 accept control data from microprocessor 14, and input the control data to instruction decoder 20. Input/output pads 1, 2, 4 and 8 are bidirectional lines and microprocessor 14 is therefore able to access speech data out of input register 22 as in an alternate embodiment wherein a control mechanism may be utilized to examine such data. Instruction decoder 20 is utilized to decode the instructions which microprocessor 14 inputs to synthesizer 10. Instruction decoder 20 also set speak latch 24 and parameter load control 26. Speak latch 24 generates logic signals which are utilized throughout synthesizer 10 to indicate that synthetic speech is being generated. Parameter load control 26 is utilized to control the loading of data into input register 22. In addition to instruction control of parameter load control 26, the status latch 28 is also capable of controlling the input of data to input register 22 by detecting certain special states of input data which will later be described in detail.

Frame control PLA 30 is utilized to decode the aforementioned special states of input data which in turn set the special state latches in status latch 28. Frame control PLA 30 also decodes special states of the input data which control how many interpolation steps take place between each frame of data, thereby allowing synthesizer 10 to vary the rate at which data is applied. Interpolation counter 34 is utilized to generate a signal which controls the number of interpolation steps which will be calculated between adjacent frames.

Code RAM 32 is a twelve by ten bit RAM utilized to store an entire frame of data. An entire frame of data will include a pitch parameter, an energy parameter and ten filter parameters. The maximum length of an uncoded parameter is ten bits, and twelve parameters are normally required for each frame.

In one mode of operation, synthesizer 10 generates synthetic speech from uncoded parameters. These parameters are transferred from code RAM 32 to the ROM/RAM load, parallel/serial converter 38, to be

3

serially loaded out to the linear predictive filter. In the alternative mode of operation the coded parameters are utilized by address PLA 36 to generate an address for the appropriate uncoded parameter stored in parameter ROM 40. The uncoded parameters from ROM 40 are inputted to converter 38 and then serially loaded out to the linear predictive filter.

The parameters outputted from converter 38 are coupled into array multiplier/interpolator 50. Array multiplier/interpolator 50 functions similarly to the array multiplier of US—A—4 209 844, with the additional capability of conducting interpolation steps. Array multiplier/interpolator 50 is coupled to filter adder 54, which is utilized to perform the additions and subtractions necessary to implement the filter function. The output of adder 54 is coupled to B stack, PPC register and Y latch register 56 and to multiplexer 58. Register 56 serves as a temporary store for those intermediate values necessary to perform the filter calculations, and storing the pitch period count (PPC). Register 56 also serves to drive D to A converter 64 with appropriate output values. D to A converter 64 converts the output of the filter to analog signals which drive speaker 18. Multiplexer 58 serves to couple information back up into multiplier/ interpolator 50 through recoding logic 52 from adder 54 or the multipurpose shift register 66.

Shift register 66 is a multipurpose shift register utilized to couple excitation data or scale data from ROM 78 into multiplier/interpolator 50 through multiplexer 58 and recoding logic 52. Scale data is utilized by multiplier/interpolator 50 to perform interpolation. Additionally, shift register 66 couples pitch period counter (PPC) information which is utilized to address excitation data in ROM 78. Pitch period counter information is coupled through multiplex 70 to address register 72 where it is utilized to address excitation data in ROM 78. Unvoiced address generator 76 is utilized during unvoiced periods of speech to randomly address one of two excitation values, utilized during unvoiced speech, which are stored in ROM 78.

Tri-state buffer 68, in an alternative embodiment of the present invention, it utilized to control the excitation input to shift register 66. Synthesizer 10 may be utilized as a residually excited synthesizer, in a vocoder application, for example. In such an alternative embodiment a residual excitation signal is applied to residual input pin 80, and tri-state buffer 68 is disabled by a control signal at residual control pin 82. In this alternative embodiment, parameters are inputted to multiplier/interpolator 50 from an external source, rather than through converter 38.

The synthesizer 10 is preferably implemented using precharged conditional discharge type logics. Thus, four clock signals, Ø1—Ø4 are appropriate for use in such precharge, conditional discharge logic. There are two main clock phases (Ø1 and Ø2) and two precharge clock phases (Ø3 and Ø4). Phase Ø3 goes high during the first half of phase Ø1 and serves as a precharge therefor. Phase Ø4 goes high during the first half of phase Ø2 and serves as a precharge therefor. A set of clocks Ø1—Ø4 is required to clock one bit of data, and thus correspond to one time period.

Timing signals, labelled TI—T22, each having a period on the order of 4.5 microseconds are utilized throughout the system. Selecting a time period on the order of 4.5 microseconds permits data to be outputted from synthesizer 10 at a 10 kilohertz rate (i.e. at a 100 microsecond period) which provides for a frequency response of 5 kilohertz in the digital-to-analog converter 64. It will be appreciated by those skilled in the art, however, that depending upon the frequency response desired, the number of reflection coefficients utilized and the type of logics utilized, the periods or frequencies of the clocks and clock phases may be substantially altered.

Thirteen parameter count (PC) signals are also utilized in the depicted embodiment of the invention. The first twelve of these, PC=0 through PC=11 correspond to the times when the energy, pitch, and K1—K10 reflection coefficients are available in parallel-serial converter 38. Each of the first twelve parameter counts comprise two cycles, referred to as the A and B cycles. Each cycle, whether A or B, begins at T18 and ends at the next T18. During each parameter count the value in parallel-serial converter 38 is utilized as a target value for interpolation with an existing value stored in a recirculating portion of multiplier interpolator 50. During the A cycle, the appropriate existing parameter is withdrawn from the recirculating portion of multiplier/interpolator 50, and during the B cycle the newly interpolated value is reinserted.

The thirteenth parameter count, PC=12, is provided for timing purposes so that all twelve parameters are interpolated once each 2.5 millisecond, and for indicating that period of time during which variable frame rate data is inputted.

As was discussed earlier with respect to interpolation, the synthesizer of the present invention is capable of performing from zero to one hundred twenty seven interpolations between each frame of parameters inputted. A new interpolation count signal is available from interpolation counter 34 every 2.5 milliseconds, and is utilized to address a scale value in excitation/scale ROM 78. Thus the period for interpolation remains constant at 2.5 milliseconds, regardless of the number of interpolation steps between two values.

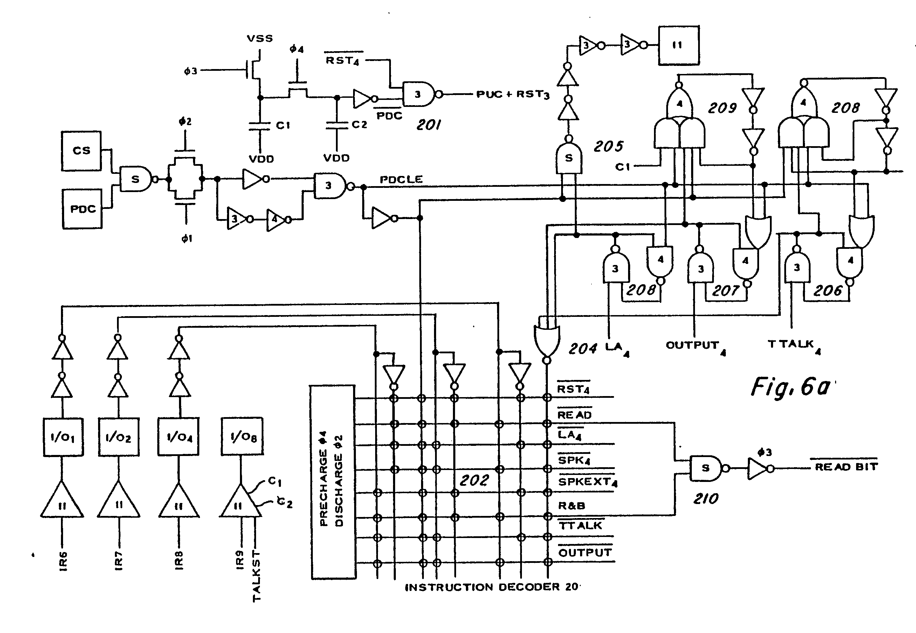

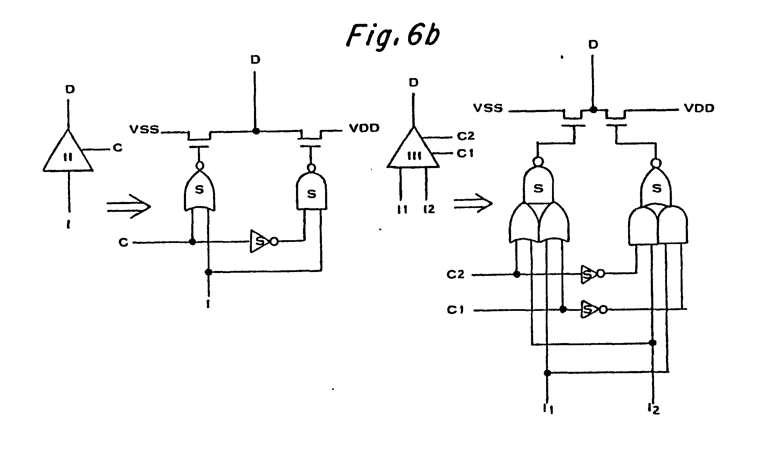

New parameters may be inputted to synthesizer 10 at a fifty hertz frame rate. It will be seen subsequently that in multiplier/interpolator 50, the pitch data, energy data and reflection coefficients are utilized as ten bit binary numbers. If each of the twelve parameters were updated with a ten bit binary number at a fifty hertz rate, a 12×10×50, or 6,000 hertz bit rate would result. Therefore, in order to lower the bit rate, the data compression scheme of US—A—4 209 836 may be utilized. In Figure 6 of US—A—4 209 836, there is shown pictorially a representation at four different lengths of data frames. One frame, labelled "voiced frame" has a length of 49 bits, while another labelled "unvoiced frame", has a length of 28 bits. A "repeat frame" has only ten bits and a "zero energy" frame has only 4 bits. In an alternative embodiment, a direct, uncoded, ten bit binary number may be loaded for each parameter. The input circuitry of synthesizer 10 is capable of accepting either format.

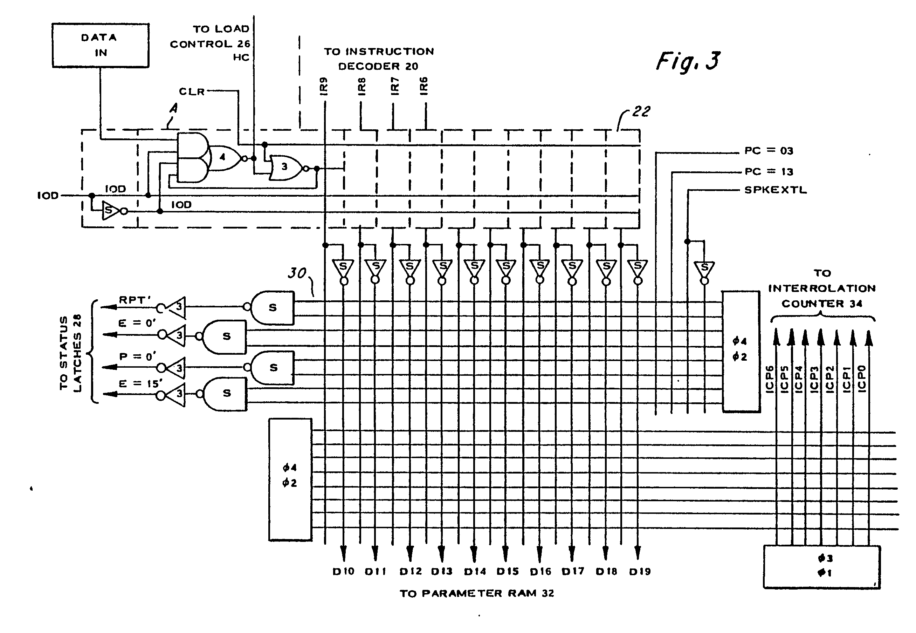

Various portions of synthesizer 10 will now be described in detail with reference to Figures 3 through 14, which depict in detail the logic circuits which implement synthesizer 10. Certain well known sections of the block diagram depicted in Figures 2a and 2b are not included in Figures 3—14. The following discussion, with reference to Figures 3—14, refers to logic signals available at many points in the circuit. Synthesizer 10, in this embodiment disclosed, is implemented in complementary MIS, such as CMOS. It must be remembered that in CMOS devices, a logic zero corresponds to a zero voltage, that is Vss. Further, the P channel devices depicted in the aforementioned figures are conductive when a logic zero is applied to their respective gates. Also, a logic one in CMOS devices corresponds to a positive voltage, +3V in the embodiment disclosed (Vdd). Therefore, the N channel devices depicted are conductive when a logic one is applied to their respective gates. When a logic signal is referred to which is unbarred, the signal is to be interpreted as "True" logic, that is, a binary one indicates the presence of Vdd and a binary zero indicates the presence of Vss. Logic signals which are barred indicate "False" logic and the aforementioned relationships are reversed. It should also be understood that a numeral in a clocked gate indicates which of the clock phases is utilized, as a precharge clock. The letter "S" in a gate indicates the gate is statically operated.

Referring to Figure 3, there is shown a logic diagram of input data register 22. Input data register 22 is a ten stage register, the first stage of which is shown within the detail marked A. Input data register 22 is ten stages in length to allow synthesizer 10 to accommodate uncoded parameters up to ten bits long, or, in an alternative embodiment, coded parameters of the type utilized in US—A—4 209 836.

Certain signals are utilized to control input data register 22. A clear signal (CLR) is generated by parameter load control 26, and is utilized to clear input data register 22 at time T22, during speech. The IO, ROM control signal, is delayed to form IOD, which is utilized to clock bits of data into input data register 22. An optional control signal, HC, is utilized as a modified Huffman code. This signal is utilized during variable frame rate operation to control the receipt of the Huffman code, which, those skilled in the art will recall, is a variable length code.

Frame control PLA 30 is shown in Figure 3. PLA 30 is a programmable PLA, and is therefore shown without gates. PLA 30 is utilized to detect certain special states which occur in the input data. Among those special states are those which effect the length of each individual frame, including: the Repeat state (RPT); the "Energy equal zero" state (E=0); the "Pitch equal zero" state (P=0); and the "End of File" or "Energy equal fifteen" state (E=15).

Additionally, the lower half of PLA 30 also decodes the Huffman code mentioned earlier, or a standard binary code, either of which may be utilized during variable frame rate operation. The decoded variable frame rate data is utilized to generate the signals ICP6—ICP0, which are in turn utilized to control interpolation counter 34. The parameters in input data register 22 are also passed through PLA 30 to the parameter RAM 32. These signals are shown in DI0—DI9.

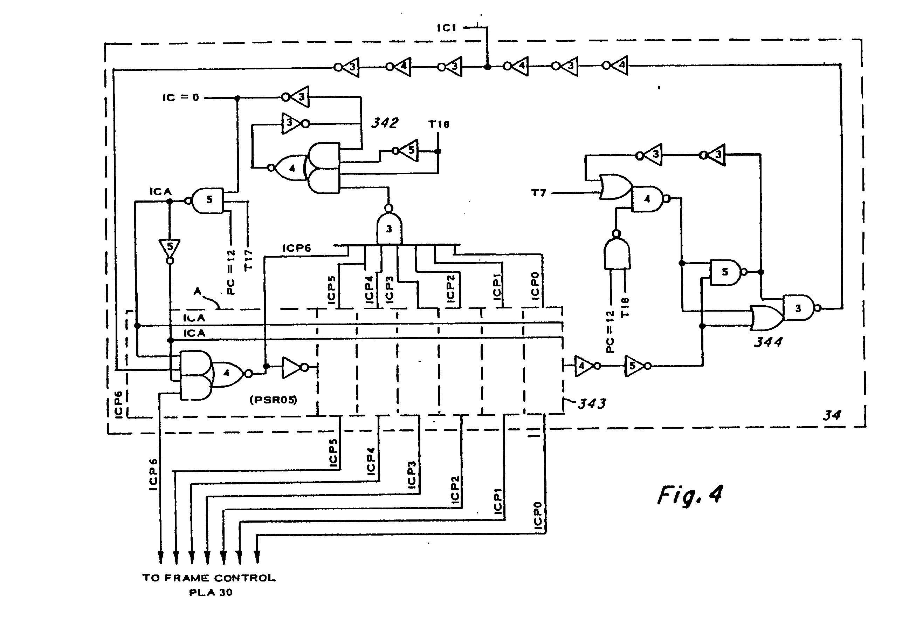

Interpolation counter 34 is shown in detail in Figure 4. Previous attempts at variable frame rate voice synthesis have had difficulty due to the problem of varying lengths of time between each frame, and the question of interpolation therein. Interpolation counter 34 is capable of utilizing the variable frame length data to control the number of interpolation steps between each frame. Thus, during rapidly changing speech, few or no interpolations take place between data frames. However, during slowly changing speech, up to one hundred twenty seven interpolations may take place.

Register 343 is a seven stage shift register, which is initially set by the signals ICP6—ICP0. The first stage of register 343 is shown within the detail marked "A". The signals ICP6—ICP0 initially set register 343 to some number, the interpolation count, which is between zero and one hundred twenty seven. The interpolation count initially set into register 343 is clocked out and around through a series of inverters which generate an appropriate amount of delay. Gates 344 are utilized to selectively increment the interpolation count after each interpolation. The new interpolation count is then shifted back into register 343, whose gate 341 is utilized to detect the "interpolation count equal zero" (IC=0) state. When the IC=0 state is detected, gates 342 are utilized to latch this condition. The IC=0 condition is utilized throughout synthesizer 10 to indicate the end of interpolation, and allow the entry of new data. The interpolation count is outputted from interpolation counter 34 to be utilized as part of the address in excitation/scale ROM 78.

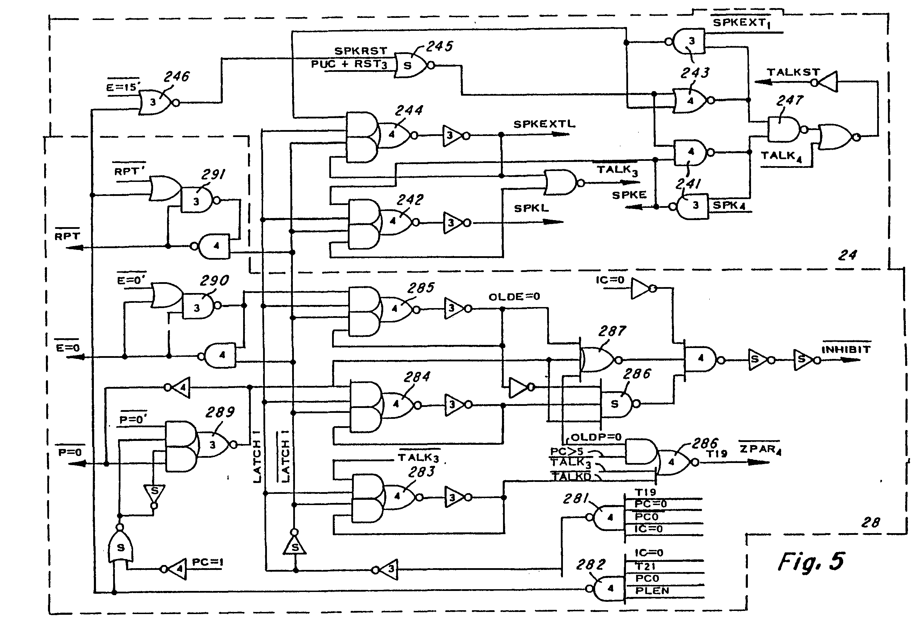

Figure 5 shows a detailed logic diagram of speak latch 24. Speak latch 24 consists of four latch circuits utilized to set and hold signals which indicate synthesizer 10 is generating speech. Gates 241 form a latch which has SPK as its input. SPK is generated by instruction decoder 20 in response to an input command which causes speech to be generated utilizing coded speech parameters. Instruction decoder 20 may also generate SPKEXT in response to an input command which causes speech to be generated utilizing uncoded, ten bit, binary parameters, as discussed earlier with respect to an alternate method of operation. The SPK command is utilized to generate the "speak enable" (SPKE) command out of gates 241, and to set latch 242 to generate SPKL. The SPKEXT command will set a latch 244 comprised of gates 243, which in turn will set latch 244 and generate SPKEXTL. The occurrence of either SPKEXTL or SPKL will in turn generate the TALK signal. Gate 245 is utilized to reset the latches comprised of gates 241 and 243 during a power up, or after a reset signal. The speak reset (SPRST) command is generated by gate 246 by receipt of an "end of file" or "Energy equal fifteen" (E=15) code. Additionally, gate 247 is utilized to latch out a "talk status" signal which indicates synthesizer 10 is generating speech. Thus, the logic signals outputted by speak latch 24 are utilized throughout synthesizer 10 to indicate the generation of speech.

Status Latches 28 are also shown in detail in Figure 5. The function of the various status latches is identical to the function described in US—A—4 209 836, and will only be described briefly herein.

Latching signal LATCH 1 is generated by gate 281 at the beginning of a frame of data, the inputs to gate 281 all signifying a frame start. The LATCH 1 signal will strobe any SPKEXTL or SPKL signal at latch 244 or 242 in the speak latch 24, and will additionally strobe the output of latches 289 (the "Pitch equal zero" (P=0 latch) and 290 (the "Energy equal zero" (E=0) latch into latches 284 and 285 to generate Old E=0 and Old P=0. The contents of latches 284 and 285 are utilized in conjunction with the P=0 signal to generate the INHIBIT signal. As in the synthesizer of US—A—4 209 836 the INHIBIT signal is utilized to inhibit interpolations in certain conditions. During transition from voiced to unvoiced speech, or unvoiced to voiced speech, it is advantageous to insert new parameters directly, without interpolations. Also, interpolations are not desirable when transitioning from silence to speech.

As was explained in detail in US—A—4 209 836 it has been determined that fewer parameters are required to accurately represent unvoiced speech. Therefore, gate 288 is utilized to generate a "zero parameter" (ZPAR) signal during unvoiced speech (Old pitch equal zero) after the parameter count has reached five (PC 5). Gate 288 also zeroes all parameters during non-speaking periods, by utilizing the TALK signal and the TALKD signal generated by latch 283.

Referring to Figure 6, there is shown a detailed logic diagram of instruction decoder 20. Instructions from microprocessor 14 are input to synthesizer 10 on I/O pins I/O1, I/O2 and I/O4. The instructions are clocked in each time a Processor Data Clock (PDC) signal is generated. The instructions are decoded by PLA 202. Many of the instructions are identical to those utilized by the synthesizer of US—A—4 209 836. A brief description of each instruction and its function is listed below.

The "Reset" (RST) instruction is a software reset instruction which is utilized by gate 201 in conjunction with the synthesizer "power up clear" (PUC) signal to form PUC+RST. This instruction is then utilized to reset speak latch 24.

The "Read" (READ) instruction is a signal from microprocessor 14 telling synthesizer 10 to access one data bit from ROM 12.

The "Load Address" (LA) instruction is an instruction which requires two PDC signals to execute. On the first PDC, the LA instruction is latched into latch 203. Latch 203 disables PLA 202 so that no command is decoded. On the second PDC, gate 205 is enabled, causing instruction decoder 20 to output an I1 signal to ROM 12. The I1 signal instructs ROM 12 to load four bits of address.

The "Speak" (SPK) instruction causes synthesizer 10 to begin synthesizing speech utilizing coded speech parameters. The SPK instruction is utilized throughout synthesizer 10.

The "Speak External" (SPKEXT) instruction causes synthesizer 10 to begin synthesizing speech utilizing direct, uncoded, parameter loading, as in the alternate embodiment discussed herein.

The "Read and Branch" (R+B) instruction is an instruction to ROM 12 to internally read data and load the data back into its address register, to allow indirect addressing.

The "Test Talk" (TTALK) instruction and the "output" (OUTPUT) instruction both require three PDC signals to execute. The TTALK instruction sets latch 206 and disables PLA 202 through gate 240. On the next PDC, the output of latch 206 is clocked through gate 208 to generate signal C2. Signal C2 is utilized to control the buffer between I/O8 and IR9, allowing the "talk status" (TALKST) signal to be output on I/O8. Thus, microprocessor 14 can determine whether synthesizer 10 is talking. The next PDC signal shuts off the C2 signal and resets latch 206. The OUTPUT instruction also requires three PDC signals to execute. Latch 207 and gate 209 interact in the same manner as latch 206 and gate 208. However, in the case of the OUTPUT instruction, a C1 signal is generated which enables the buffer to all of the I/O pads. In this manner, microprocessor 14 can access data in ROM 12, through synthesizer 10.

Detail diagrams of the buffers for the I/O pads are also shown in Figure 6b.

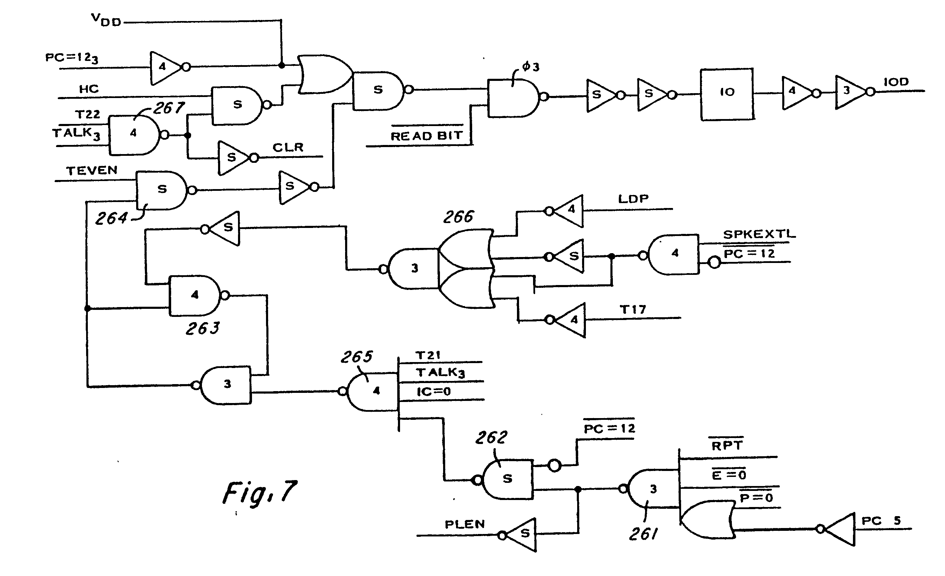

Parameter load control 26 is shown in detail in Figure 7. Parameter load control 26 generates the I0 signal to ROM 12. The I0 signal and the I1 signal, generated by instruction decoder 20, control ROM 12 in the manner described in US—A—4 209 836. The I0 signal is utilized to clock data out of ROM 12.

Gate 261 is utilized to generate the Parameter Load Enable (PLEN) signal which allows parameters to be written into code RAM 32. PLEN is generated unless one of three conditions exist at the input of gate 261. When a repeat (RPT) bit is detected, the PLEN signal stops. A RPT bit is utilized when old parameters are to be repeated, thus no new parameters should be loaded. When the Energy parameter is zero (E=0), indicating silence, the PLEN signal is disabled. Lastly, as described in US—A—4 209 836, during unvoiced speech the system utilizes fewer parameters to accurately represent speech. Thus, when the pitch parameter is equal zero (P=0) and the parameter count indicates that the first six parameters have been loaded (PC>5), PLEN is disabled.

Gate 262 is utilized during variable frame rate operation to allow the frame rate data to be loaded (at PC=12) despite a condition which would preclude loading parameters. Gate 266 is utilized to set latch 263, the output of which is utilized in conjunction with the even clock times (TEVEN) by gate 264 to generate I0 signals. Gate 266 is utilized to distinguish between loading coded or direct parameters, since in the embodiment disclosed coded parameters consist of two to seven bits and direct parameters consist of ten bits. Gate 265 is utilized to reset latch 263. Gate 267 is utilized to generate the CLR signal which clears the input register.

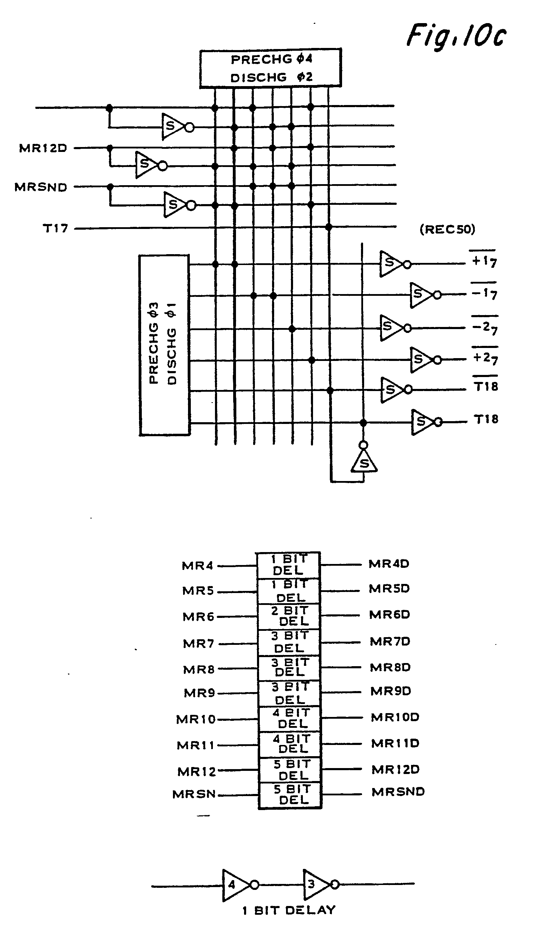

Recoding logic 52 couples the outputs of multiplexor 58 to multiplier/interpolator 50. Recoding logic 52 is shown in detail in Figures 10a—d. Recoding logic 52 consists of six stages, three of which are identical, as seen in Figure 10b. The first stage of recoding logic 52 (labelled REL 20) generates signals for the first two stages of multiplier/interpolator 50. The subscripts on each control signal indicate to which stage of multiplier/interpolator 50 it is coupled. The third stage of multiplier/interpolator 50 and the seventh stage require additional control signals due to the interpolation function therein. The INT signal discussed in the interpolation section is generated in the section of reading logic 52 labelled REL 30 in Figure 10a, and the T18 signal for the seventh stage is generated by the stage labelled REL 50 in Figure 10c. Recoding logic 52 outputs $\overline{+2}, \overline{-2}, \overline{+1}$ and $\overline{-1}$ to each stage of multiplier/interpolator 50 with the exception of stage one which receives only $\overline{+1}, \overline{-1}$, and $\overline{-2}$ outputs. Effectively, as seen in US—A—4 209 836, recording logic 52 permits multiplier/interpolator 50 to process, in each stage thereof, two bits of information in lieu of one, by utilizing Booth's Algorithm. Booth's Algorithm is explained in "Theory and Application of Digital Signal Processing", published by Prentice-Hall 1975, at pp. 517-18.

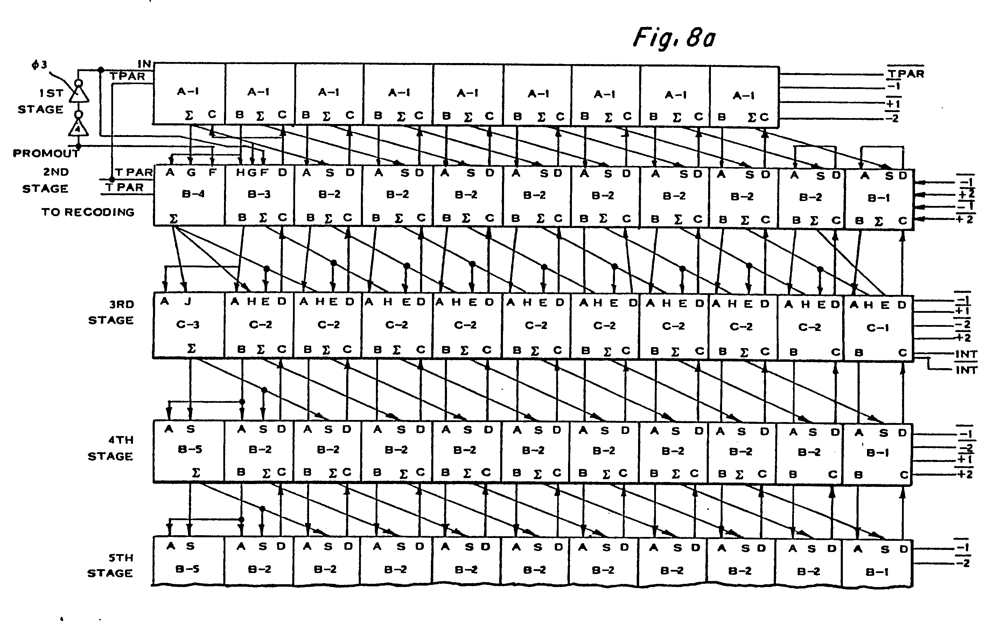

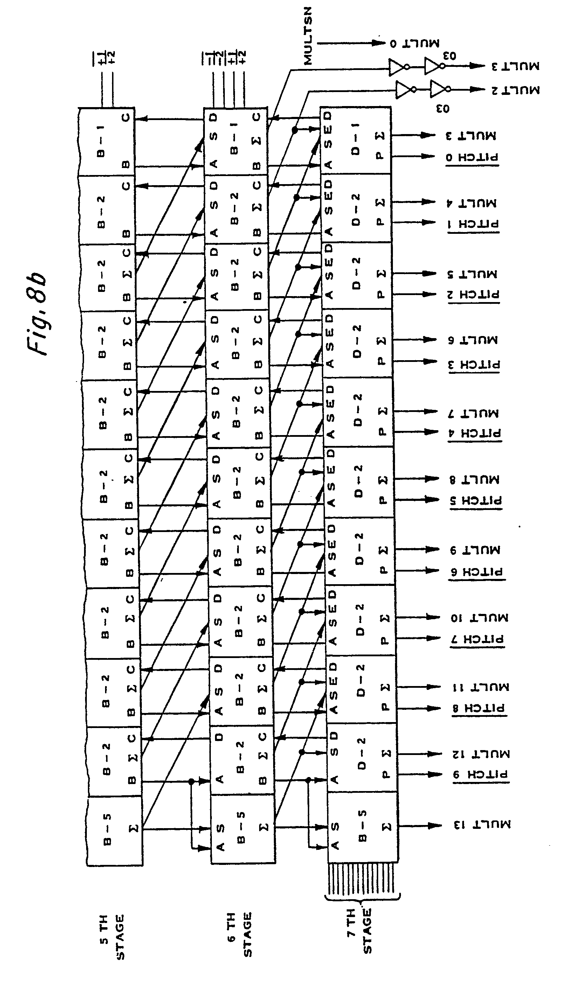

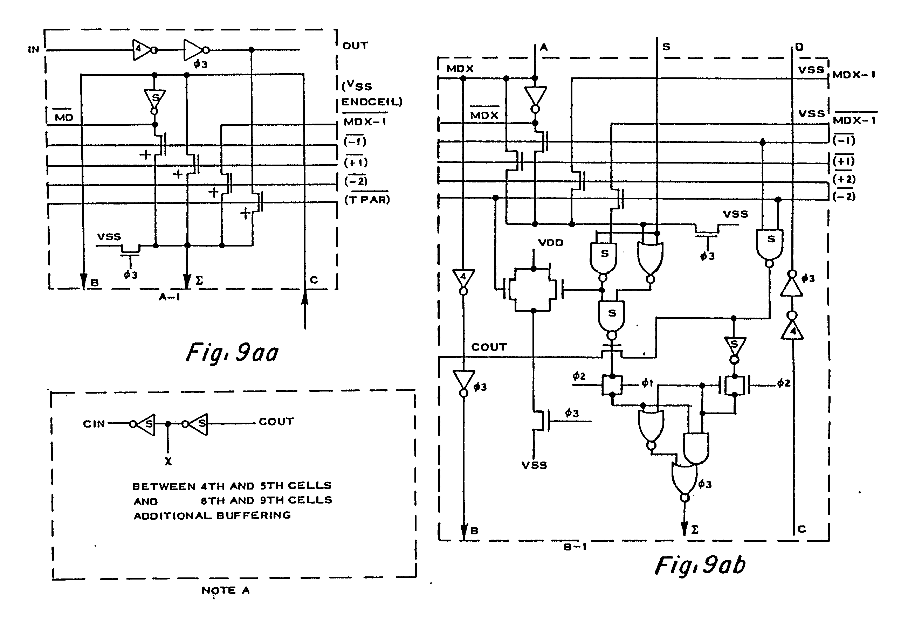

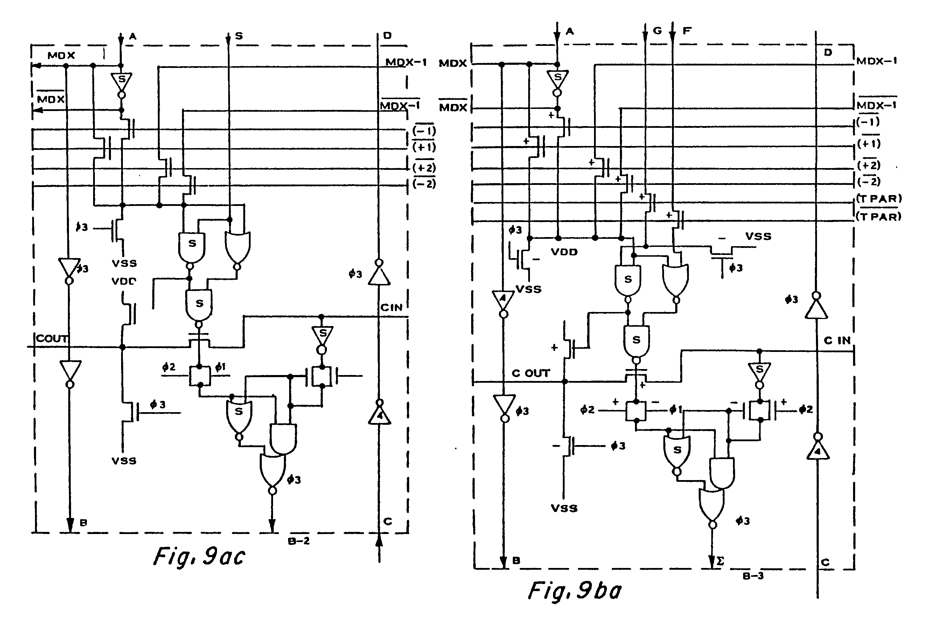

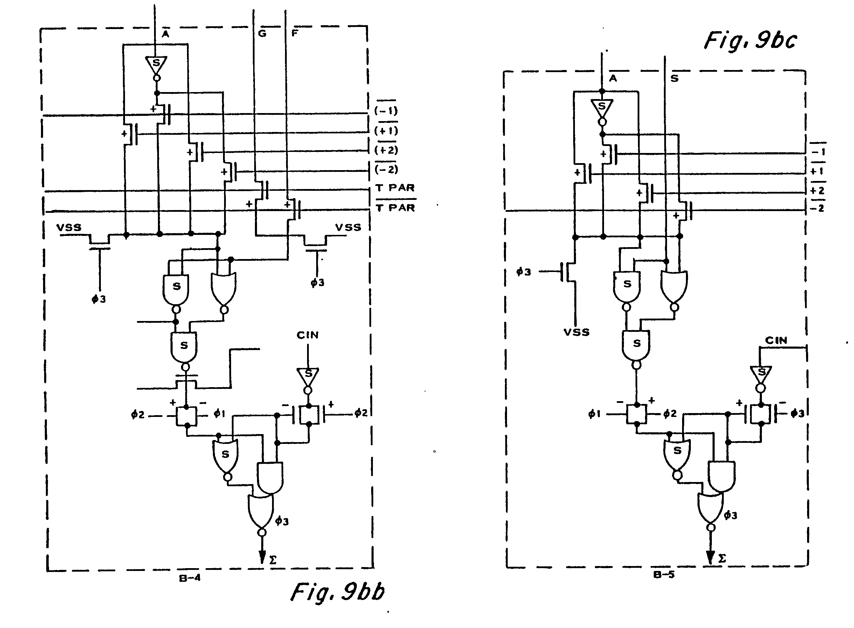

A block diagram of multiplier/interpolator 50 is formed by the composite of Figures 8a and 8b. Multiplier/interpolator 50 is an array multiplier. Array multipliers are sometimes referred to as "Pipeline Multipliers". For example, see "Pipeline Multiplier" by Granville Ott, published by the University of Missouri. Multiplier/interpolator 50 has seven stages, stage 1 through 7 and operates similar to the array multiplier disclosed in the aforementioned US—A—4 209 844. The equations in Table I herein represent the operation of the digital filter wherein multiplier/interpolator 50 and filter adder 54 are utilized to solve these equations.

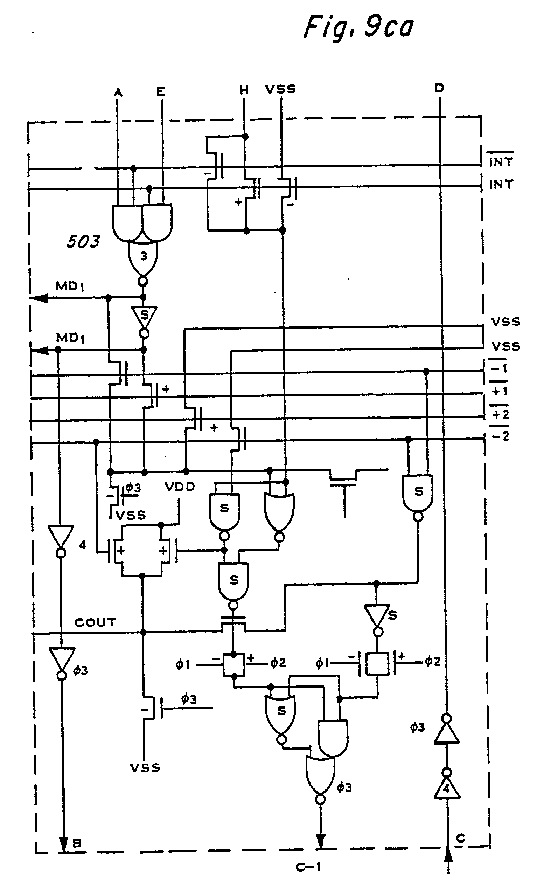

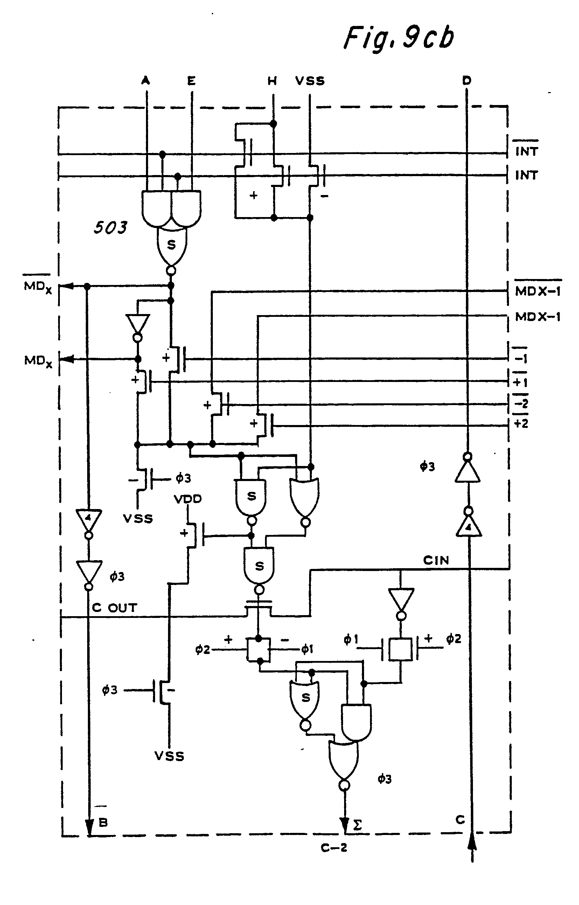

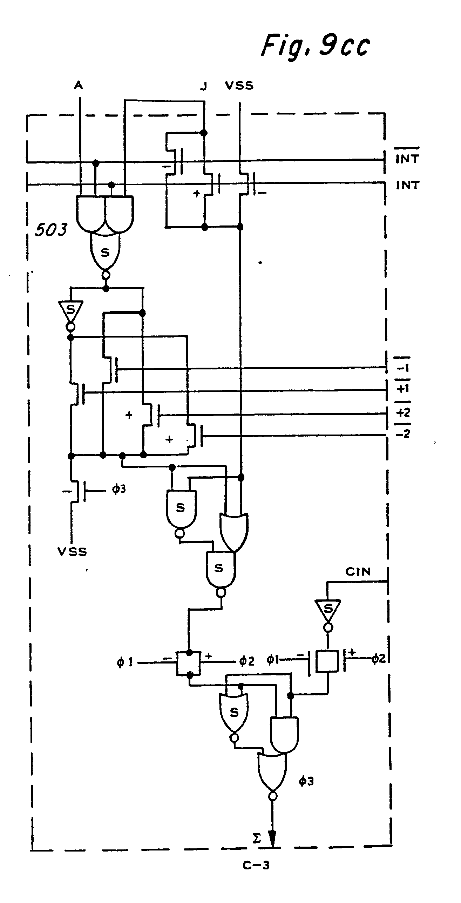

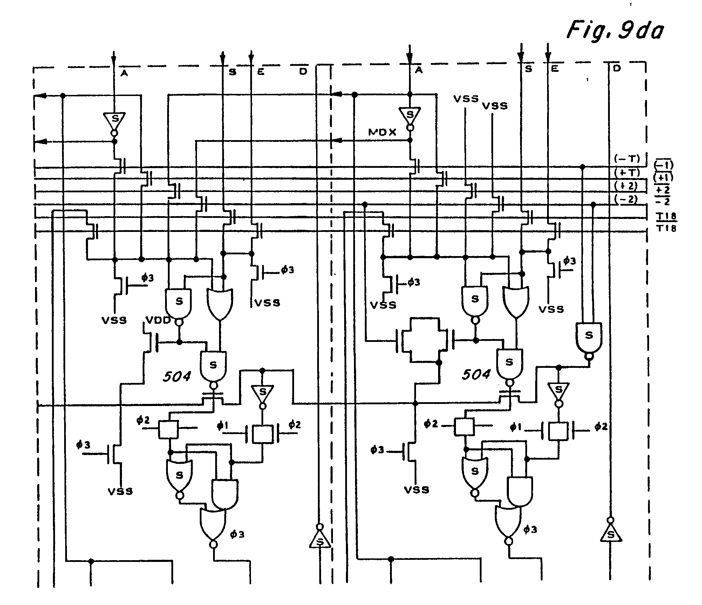

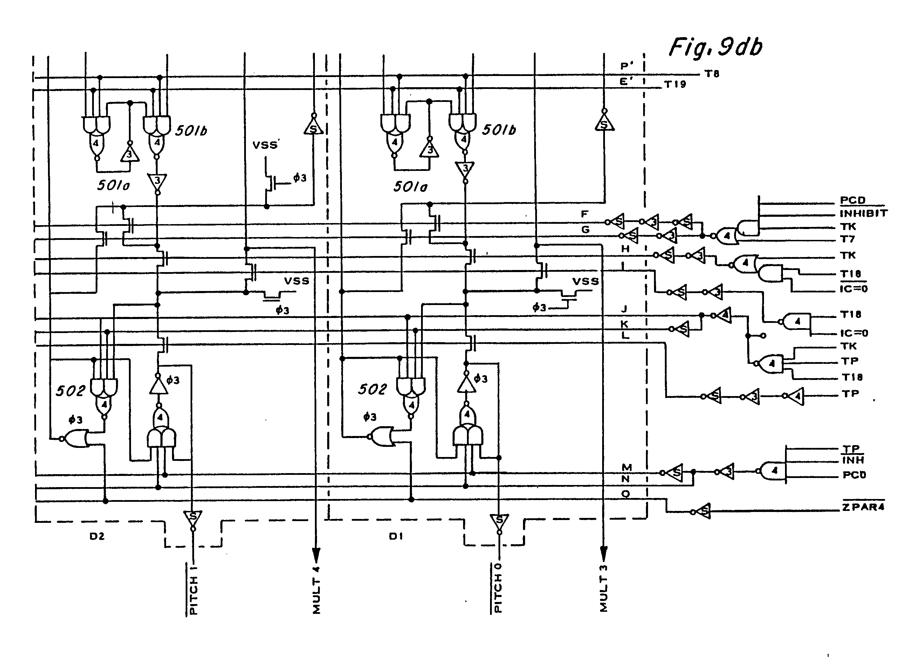

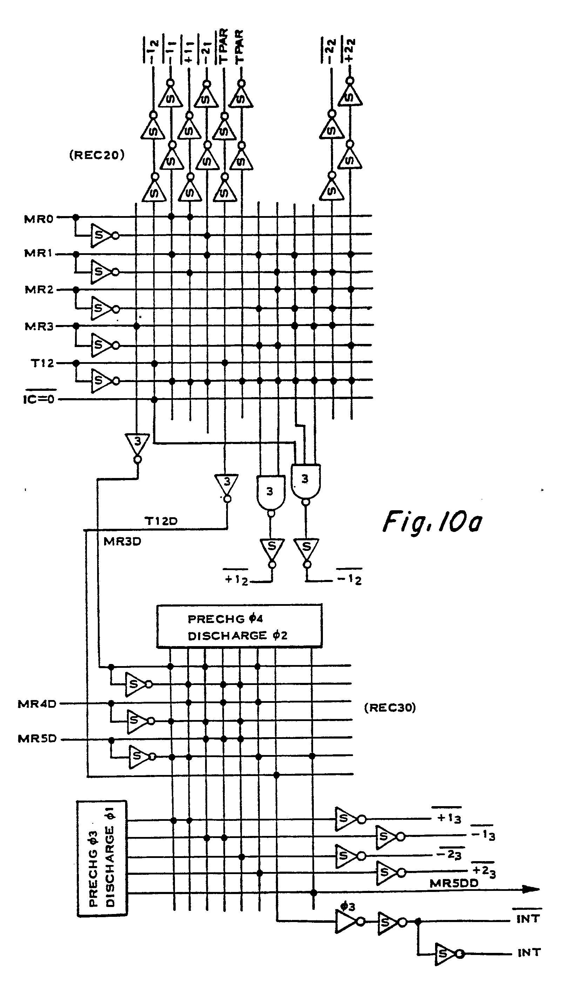

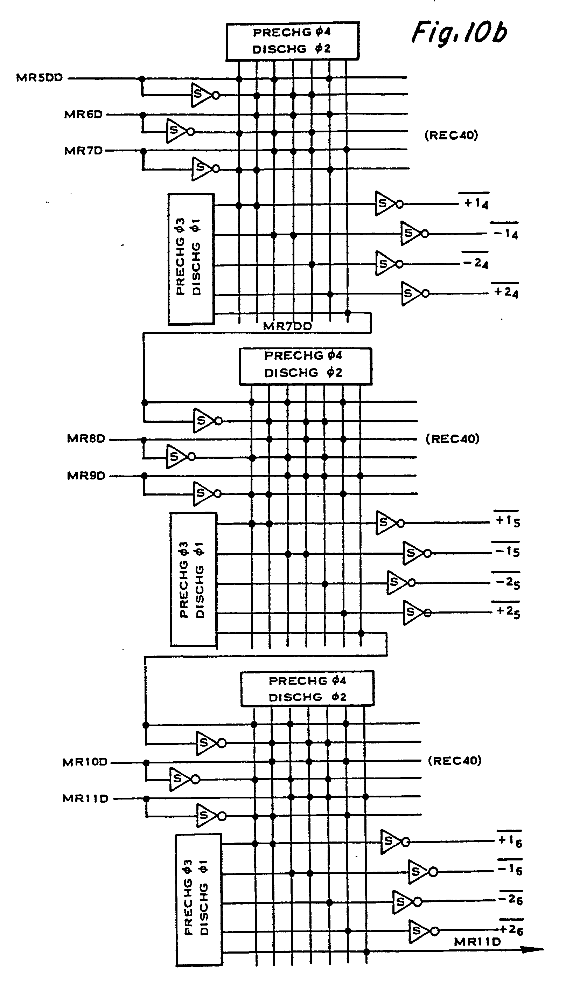

The inputs to multiplier/interpolator 50 are the target values for new parameters, input at the PROMOUT terminal of the first stage, the aforementioned $\overline{+1}, \overline{-1}, \overline{+2}$ and $\overline{-2}$ signals from recoding logic 52, and the INT and TPAR signals from recoding logic 52. The outputs of multiplier/interpolator 50, MULT 0—MULT 13 and $\overline{PITCH\ 0}$—$\overline{PITCH\ 9}$ are applied to filter adder 54. The blocks which make up individual sections of each stage are labelled A-1, B-1 through B-5, C-1 through C-3 and D-1 and D-2. The detailed logic diagrams of each block section are shown in Figures 9a—9d. The operation of multiplier/interpolator 50 is identical to that of the multiplier in US—A—4 209 836, with the exception of additional interpolation circuitry which will be explained with reference to Figures 8a and 8b and also 9a—9d.

The first stage of multiplier/interpolator 50 is comprised of nine A-1 blocks, with an additional bit of storage in the two inverters on its input and are thus responsive to the TPAR signal and to $\overline{-1}, \overline{+1}, \overline{-2}$ signals output from recoding logic 52. When multiplications occur in multiplier interpolator 50, the most significant bit is always maintained in the left most column elements while the partial sums are continuously shifted toward the right. Inasmuch as each stage of multiplier/interpolator operates on two binary bits, the partial sums, labelled E are each shifted to the right two places. Thus, a total capacity of ten bits is available. As explained earlier, whether coded or direct parameters are utilized, the parameters utilized in multiplier/interpolator 50 are ten bits in length, due to the decoding of any coded values by address PLA 36 and ROM 40. The ten bit parameters which are loaded into multiplier/interpolator 50 represent the target values for current calculations. As the interpolation calculations reach these target values, the target values become current values, and new target values are loaded into multiplier/interpolator 50 at the PROMOUT point.

Current values for filter parameters are stored within multiplier/interpolator 50 in recirculating shift registers contained in all but the most significant bit of each stage. The recirculating shift registers circulate out of B terminals of each block and into the A terminals of the block below. At the bottom or seventh stage, the values are circulated back up through the D terminals into the C terminals. The current values shifted into the A terminals of each block are the multiplicands. The multipliers are the values input to multiplier/interpolator 50 by recoding logic 52.

The recirculating shift registers within multiplier/interpolator 50 form an eleven bit shift register, with each parameter shifting by each eleven time periods. There are twenty-two time periods, and each parameter K1—K9 is utilized twice during filter calculations. Thus eighteen time periods are required for these nine parameters. The K10 value and the energy value, as disclosed in US—A—4 209 836, are each utilized once in filter calculations, and are therefore swapped or exchanged, in the seventh stage of multiplier/interpolator 50. This requires two additional time periods. Of the two remaining time periods, one is utilized during interpolation, and the other is not utilized.

In Figure 9d, there is shown a detailed logic diagram of blocks D2 and D1. In each of the D type blocks, there is shown a group of gates labelled 501. The leftmost, latch 501a is a recirculating latch wherein either K10 or the energy value is stored. The multiplex gate 501b, in gates 501, is controlled by the signals labelled P' and E' which determine whether the signal outputted at the D terminal is the input from terminal A, or the contents of latch 501a. When the input signal at terminal A is the K10 parameter, it is stored in latch 501a and the previous contents of latch 501a is output through multiplexer 501b. The output of multiplex gate 501b is coupled to terminal D through a transmission gate controlled by the signal labelled F.

As discussed above, multiplier/interpolator 50 contains a recirculating shift register formed by vertical contacts between stages. The energy and K1—K10 parameters, which represent the current values, are recirculating through this register, occupying twenty of the possible twenty-two time periods. In order to perform interpolation, the current value of any given parameter must be captured and presented in the stage of multiplier/interpolator 50 to determine the difference between that current value and the target value being input at the appropriate time. Interpolation must take place when each target value is inputted, and not necessarily when the current value has circulated up to the proper position. The new current value $(V_{n}+1)$ represents the sum of the old current value $(V_n)$ plus some scale factor (N) times the difference between the old current value $(V_n)$ and the target value $(V_T)$. N, the scale value is some fractional number stored in ROM 78 and utilized during variable interpolation. Thus the interpolation formula may be expressed:

$$(1) \qquad V_{n+1}=V_n+N(V_T-V_n)$$

The sample of any given current value must therefore be stored until the unused time period which is utilized for interpolation. Each block in the seventh stage of multiplier/interpolator 50 has a storage latch 502, wherein the current value is temporarily stored. When a parameter to be interpolated circulates into the seventh stage D block, it passes through multiplex 501b and out through the D terminal, the value is also sampled through the transmission gate controlled by the signal N, and placed in storage latch 502. Storage latch 502 has a two input NOR gate on its recirculation line, the other input of which is the ZPAR signal utilized to zero parameters in specific states discussed above. Thus, the current value of the parameter to be interpolated is temporarily stored in storage latch 502. At the appropriate time period (T7 in the embodiment disclosed) the control signal labelled G is generated, and the contents of storage latch 502 is output to the D terminal. Therefore, the recirculating shift registers in multiplier/interpolator 50 contain the parameters K1—K9 an exchanged value representing K10 or Energy, and the about to be interpolated value of one of the parameters. The value to be interpolated is shifted up to the second stage of multiplier/interpolator 50 and, at the same time, the target value for that particular parameter is serially shifted into the first stage. Recoding logic 52 provides a $\overline{-1}$ signal to the second stage, which operates on the value to be interpolated, the result of which is then added to the target value, which generates $V_T-V_n$, for output at the $\Sigma$ output terminal.

The third through sixth stage of multiplier/interpolator 50 act as an eight by ten bit multiplier during the interpolation time period for multiplying the difference between the target value and the current value $(V_T-V_n)$ times the scale value N. The various values for N are stored in ROM 78 and inputted to multiplier/interpolator 50 through recoding logic 52, from multiplex 58 and shift register 66 (as shown in Figure 2b).

The third stage of multiplier/interpolator 50 is different from other stages due to the fact that the sum out of the second stage during interpolation is not merely added to the next calculation. In the interpolation operation, it is required that $V_T-V_n$ be utilized as the multiplicand in order to be multiplied by scale factor N. Thus, the $V_T-V_n$ value must be substituted for the multiplicands which are normally inputted on the A terminal from the B terminal above, in the normal recirculating shift register operation described above. In order to accomplish this exchange, each of the C blocks of multiplier/interpolator 50, shown in Figure 9c, has a multiplex gate 503, controlled by the signal INT, which operates during the interpolation mode. When a $V_T-V_n$ value is present in the second stage of multiplier/interpolator 50, the INT signal controls gates 503 so that the signal at the E input terminal is selected by gate 503 and $V_T-V_n$ is inserted into the recirculating shift register to be utilized as the multiplicand. The $V_T-V_n$ value is inserted during one of the two unused time periods discussed above and therefore has no effect on the recirculating current parameter values. Since during interpolation, the third stage of multiplier/interpolator 50 is utilized as the first stage of an eight by ten bit multiplier, as discussed above, the input on the H terminal must be forced to zero. This is also accomplished by the INT signal coupling Vss into each C block at the H terminal.

The $V_T-V_n$ value is thus forced into the multiplicand position, and multiplied by the scale value N. Therefore the output of the sixth multiplier stage is the value $N(V_T-V_n)$. The seventh stage of multiplier/interpolator 50 is utilized to add the current value of a parameter to the recently calculated $N(V_T-V_n)$ value. As shown in the detail of the D blocks in Figure 9d, at time T18, the normal S input terminal is disabled and the E input is enabled through the bank of transmission gates depicted. $\overline{T18}$ also enables a transmission gate which allows the contents of storage latch 502 to be coupled to full adder 504. Thus the output of full adder 504 is the solution to Equation (1) or $V_n+N(N_T-V_n)$. The output of full adder 504 is coupled through a transmission gate controlled by the signal labelled I and coupled into storage latch 502. This is necessary since the newly interpolated value is always available at T19, due to the requirement that all interpolation calculations take place during the aforementioned window or open spot which occurs in the recirculating shift register. At the appropriate time, the contents of storage latch 502 is forced back into the recirculating shift register through a transmission gate controlled by the signal labelled G. A special case occurs at the last interpolation prior to achieving the target value, or as described earlier herein, the IC=0 state. To avoid the problems generated by slight errors which may cause the interpolated value to be slightly over or under the target value, a special case is utilized for the last interpolation or interpolation count equal zero state (IC=0). As in normal interpolation, the current value of a particular parameter is captured and inserted into the interpolation time period in the recirculating shift register. However, rather than being operated upon by the $\overline{-1}$ signal from recoding logic 52, the current value is zeroed and then subtracted from the target value. The target value is then circulated down to the seventh stage of multiplier/interpolator 50 where it is input on the A terminal. The signal is then shifted through multiplier 501b in each block of the seventh stage, and inserted into storage latch 502 directly by way of a transmission gate controlled by a signal labelled H. Thus, rather than a newly interpolated value, during the last interpolation the target value itself is inserted into storage latch 502. Again as above, at the appropriate time the contents of storage latch 502 is inserted into the recirculating shift register to replace the old current value. This progress is repeated, and a new parameter is interpolated.

A slightly different operation is utilized for interpolation of the pitch value. After a target value for pitch is input to multiplier/interpolator 50, it is circulated down through the recirculating shift register discussed above. Entering the seventh stage at the A terminal, it is passed through multiplex gate 501b and stored in storage latch 502. If the value in storage latch 502 is a pitch value, it is stored in pitch latch 505. Each block of the seventh stage of multiplier/interpolator 50 has a latch 505 for storing one bit of the pitch value. The pitch latch 505 is controlled by the signals labelled M and N in Figure 9d. Pitch latch 505 then stores the pitch value until the appropriate time, when the control signal labelled $\overline{L}$ allows the pitch value to be outputted.

The outputs of multiplier/interpolator 50 include $\overline{\text{PITCH 0}}$—$\overline{\text{PITCH 9}}$, representative of the pitch value stored in the pitch latch formed by gates 505, and MULT 0—MULT 13 which represents the intermediate products generated during filter operation. As shown in Figure 8b, the least significant bit of the MULT output (MULT 0) is forced to the value of the sign bit (MULTSN). This transaction is utilized to prevent the negative drift which normally results from simple truncation of a two's complement number. By forcing the least significant bit to the value of the sign bit, truncation is always toward zero. Those skilled in the art will appreciate that this truncation scheme will help avoid the "limit cycle" problem.

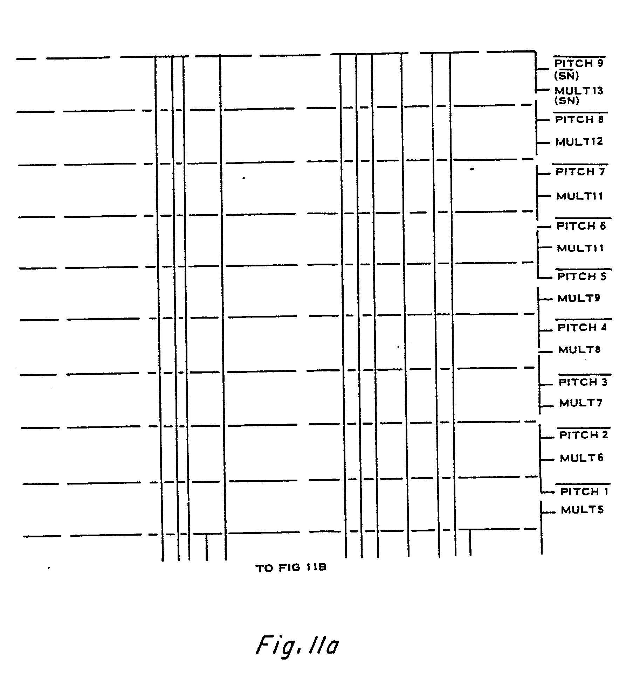

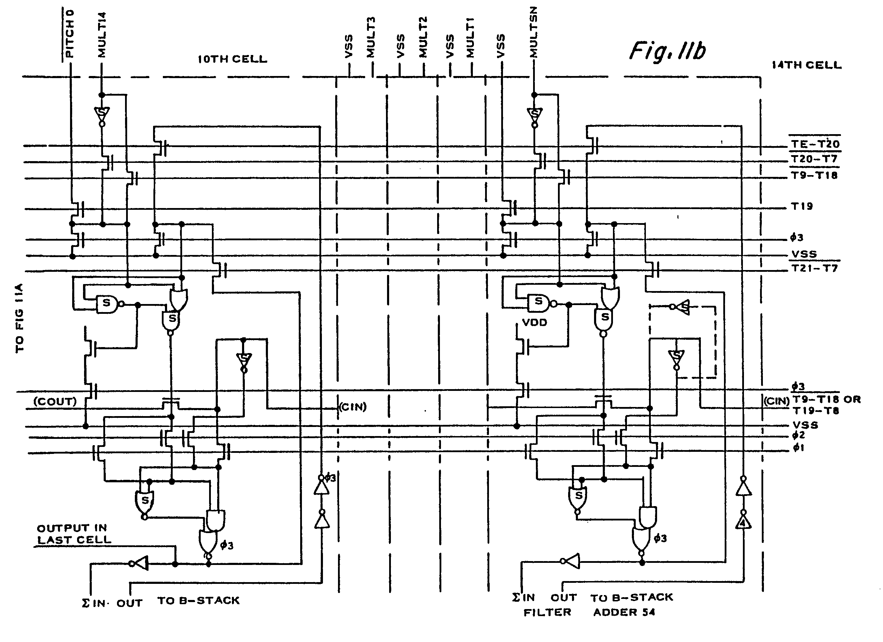

Filter adder 54 is shown in Figure 11. The tenth and fourteenth block of filter adder 54 are shown in detail. Filter adder 54 is utilized to perform the additions and subtractions necessary to solve the equations listed in Table I. There are twenty additions or subtractions required to implement a ten pole filter, utilizing twenty of the twenty-two time periods. During the free time periods, filter adder 54 increments a pitch period counter signal and compares it to the pitch value inputted from multiplier/interpolator 50. The pitch period counter (PPC) is utilized to address periodic or voiced excitation values in ROM 78. When the PPC signal is equal to the pitch value, it is zeroed and begins incrementing again. A more detailed description of the PPC signal operation is listed below.

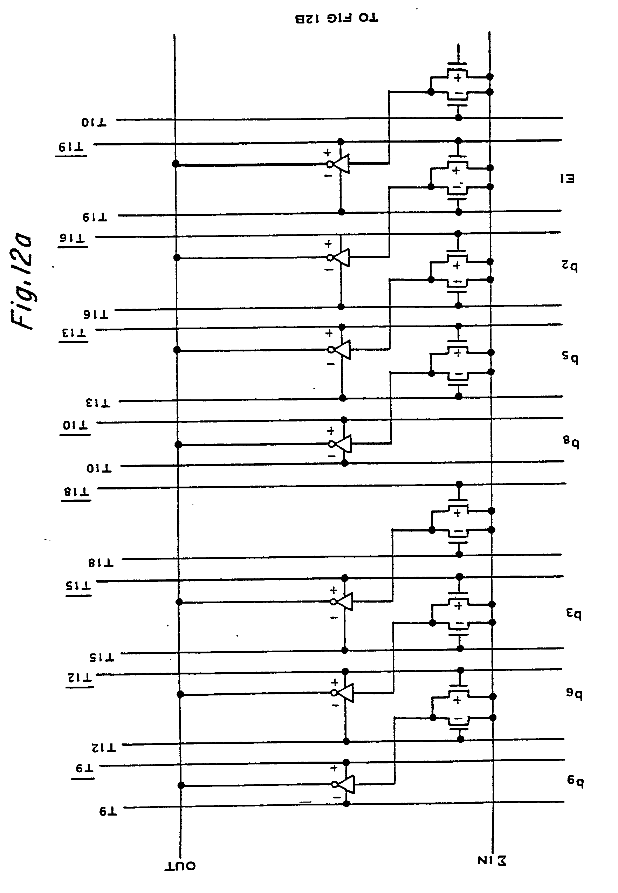

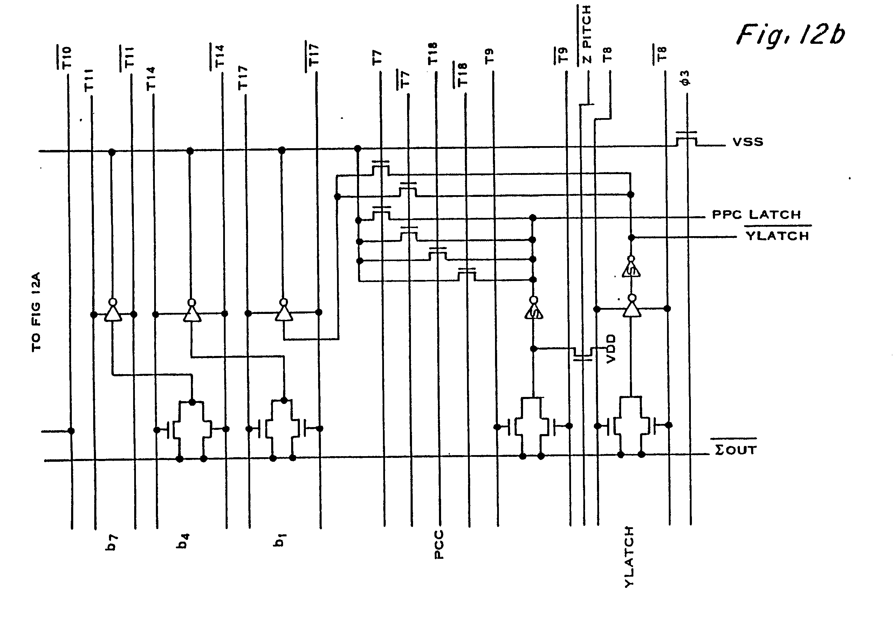

B stack 56 is a temporary storage facility utilized to temporarily store those intermediate values or "b" values which are necessary to solve the equations listed in Table I. B stack 56 is shown in detail in Figure 12. B stack 56 also provides temporary storage for the aforementioned PPC signal and the YLATCH signal which represents the output of the filter formed by multiplier/interpolator 50 and filter adder 56. The YLATCH output is coupled to the digital to analog converter and is utilized to generate analog signals representative of human voice. The PPC signal is output to multipurpose shift register 66 where it is utilized to address excitation values.

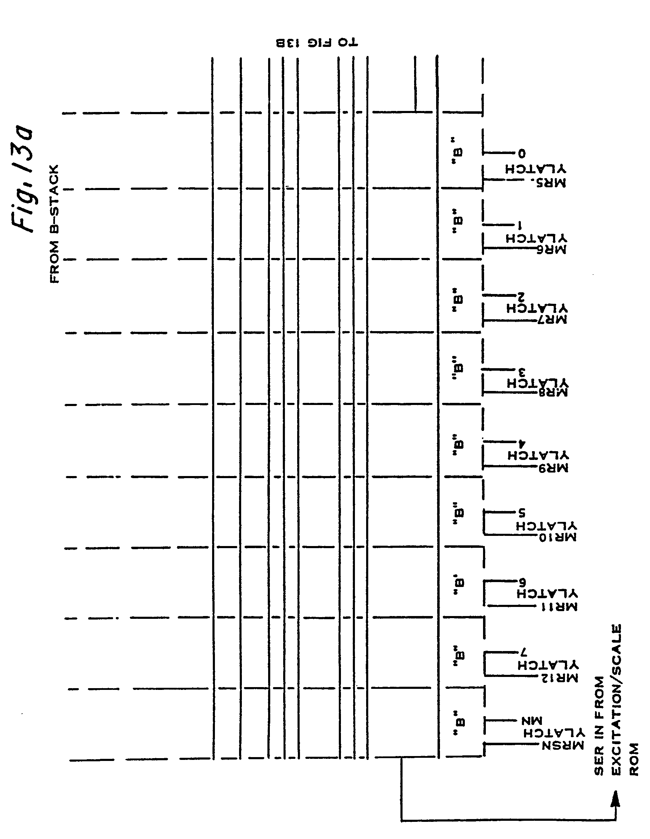

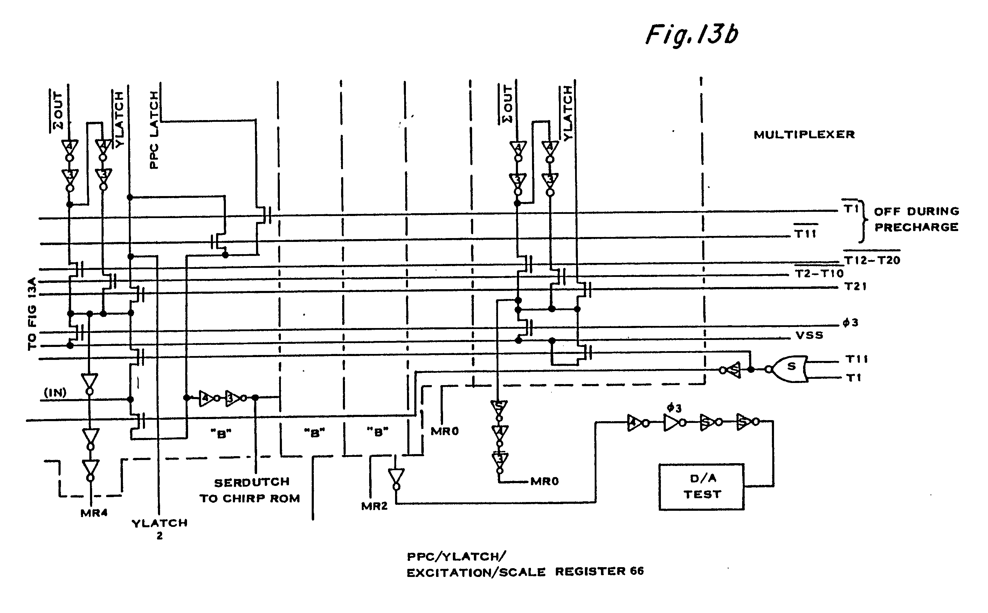

The multipurpose shift register 66 and multiplex 58 are shown in Figure 13, and two of the stages are shown in detail therein. Referring to the block diagram of Figure 2b and the equations of Table I will facilitate an understanding of the interworkings of the filter output circuitry. The MULT outputs from multiplier/interpolator 50 represent intermediate products required to solve the equations of Table I. Such products may be a K value times a b value, or a K value times a Y value. Filter adder 56 then adds or subtracts the intermediate product from a Y value or a b value to obtain a Y value or a b value. B stack 56 is utilized to store these b values, since each b value is utilized in filter adder 56 to calculate the next b value. The PPC signal from B stack 56 is input to shift register 66 and output to multiplex 70. Multiplex 70, not shown in detail, utilizes the PPC signal to address voiced excitation values stored in ROM 78. Any conventional address scheme may be utilized. The values stored in ROM 78 represent a chirp function, as in US—A—4 209 836, and it has been found that a chirp function closely models vocal cord excitation. Multipurpose shift register 66 also receives the aforementioned excitation values, or scale values addressed by an interpolation count signal from ROM 78 which are multiplexed out as MR signals to recoding logic 52.

The scale values stored in ROM 78 are chosen by the operator to generate any desired type of interpolation. As previously discussed, the IC or interpolation count may be any number from one to one hundred twenty seven. The IC count is utilized to address scale factors in ROM 78, thus, in the embodiment disclosed, up to one hundred twenty seven custom scaling values may be stored in ROM 78. A mask programmable option, or programmable type memory will allow easy substitution of scale values or excitation values. Scale values are typically fractional values utilized during interpolation of speech data and may be linearly or nonlinearly related.

Another important feature of the excitation signals provided by ROM 78 concerns the capability of scaling unvoiced excitation. In previous speech synthesis systems, such as disclosed in US—A—4 209 836 the unvoiced excitation is characterized as white noise. Such an input may be generated in many ways, such as a constant value with a pseudorandom sign bit. This solution is quite adequate; however, the inability to scale the unvoiced excitation to the voiced excitation results in unbalanced excitation signals. ROM 78, in the embodiment disclosed, also stores two unvoiced excitation signals, of approximately equal value, and opposite sign. A random bit is generated by unvoiced address generator 76 and is utilized as one bit in the address of the two aforementioned unvoiced excitation signals. This allows great resolution of the level of the unvoiced excitation, and further, allows the operator to change the level or value to balance excitation signals. Although ROM 78 is disclosed in the present embodiment as a Read Only Memory, those skilled in the art will appreciate that a Random Access Memory will provide an easier method of value changing than the mask programmable method required by a Read Only Memory.

An alternate form of excitation is also available through tristate buffer 68, shown in Figure 2b. This gate allows synthesizer 10 to be utilized as a residually excited synthesizer, in a vocoder application for example.

Multiplex 58 is utilized to couple the newly calculated "b" values or Y values to recoding logic 52. Multiplex 58 may also couple excitation values or scale values to recoding logic 52, the former for filter calculations, and the latter for interpolations. The outputs of multiplexer 58 are labelled MR0—MR12 and MRSN (for sign bit).

The digital-to-analog converter herein described is particularly well suited to low voltage applications and may be implemented in complementary MIS, such as CMOS, and may be integrated on a common semiconductor substrate with the CMOS synthesizer described above.

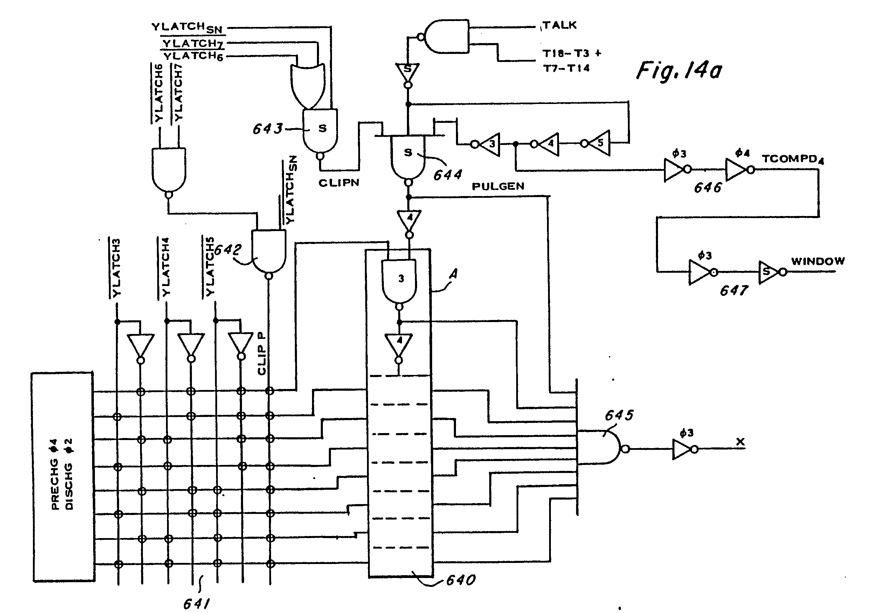

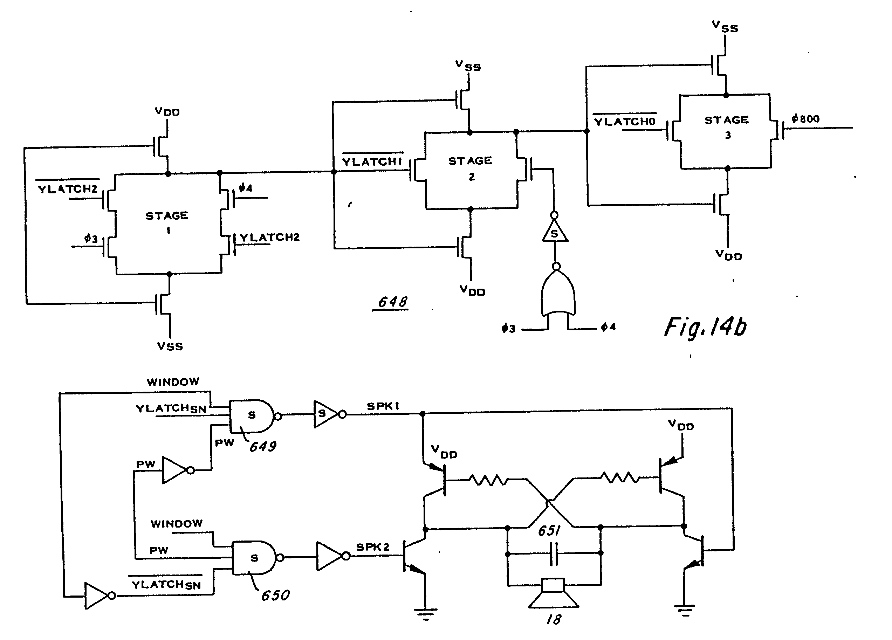

Digital-to-Analog converter 64 receives the YLATCH output signal from B stack 56 in a nine bit, two's complement notation, and converts the YLATCH signal into an analog signal representative of human speech. A detail description of Digital-to-Analog converter 64 is seen in Figures 14a and b.

In Figure 14a, there is shown a PLA 641 with inputs $\overline{YLATCH3}$, $\overline{YLATCH4}$ and $\overline{YLATCH5}$. Another input is the signal CLIPP from gate 642. Gate 642 and Gate 643 form a clipping circuit. A nine bit two's complement signal has a range from −256 to +255. It has been demonstrated that the larger values of a speech waveform convey little intelligence and may be clipped without loss of essential intelligence. Gates 642 and 643 examine the two most significant bits of the YLATCH signal ($\overline{YLATCH6}$ and $\overline{YLATCH7}$) and the sign bit $\overline{YLATCHSN}$ to determine if the absolute value of the incoming value exceeds 64, a CLIPP or CLIPN signal is generated.

Shift register 640 is a controllable register triggered off gate 644. Gate 644 generates a leading edge of the time periods T18 through T3 or T7 through T14, when synthesizer 10 is generating speech. Gate 644 may be disabled by the CLIPN signal, thus preventing a pulse from shifting into register 640. Assuming a large negative value is not present, the leading edge propagates down register 640, to an extent controlled by PLA 641. The YLATCH values input to PLA 641 will determine how far down register 640 the pulse propagates. It should be noted that in the event of a large positive value, CLIPP will cause the pulse to propagate to the end of register 640. The output gate 644 is coupled directly to gate 645, as are the complemented outputs of the eight stages of register 640. Therefore, if gate 644 is enabled, gate 645 will act as an OR function, and at point X there will be generated a variable width pulse, ranging from one to eighth time periods in length. Additionally, the composite signal comprised of TALK, and T18 through T3 or T7 through T14 is delayed by gates 646 to form TCOMPD4, a delayed signal. The TCOMPD4 signal is further delayed to form a signal called WINDOW. Gates 647 are shown providing the additional half bit of delay; however, for additional accuracy, the WINDOW signal may be finely adjusted utilizing high speed clock signals. The WINDOW signal is required to remove the PULGEN, minimum pulse width, when all inputs are zero. The PULGEN signal is required to charge the logics in the programmable delay shown in Figure 14b.

In Figure 14b is shown a detailed logic diagram of a three stage programmable delay 648 and the output speaker drive circuitry. The programmable delay shown in Figure 14 has three stages. Each stage has a positive or P type device and a negative or N type device above and below it. A zero at point X will turn on the P device in stage 1, the N device in stage two and the P device in stage 3, causing PW to be a logic one or VDD. Thus a positive pulse out of gate 645 (Figure 14a) will be propagated through programmable delay 648 statically. When the pulse ends, or X goes to a logic one, the P device in stage one shuts off and the N device conducts. Following this, the output of stage one will go to Vss, or logic zero, conditionally, base upon the clock gates contained between the P device and N device. The clocked gates in stage one are thus capable of extending the pulse-width seen at PW. Stage one is clocked to provide either one half of a time period of delay, or no additional delay. Similarly, stage two can provide either one fourth of a time period delay, or no additional delay. Stage three also operates similarly; however, a special high speed clock Ø800 is utilized to provide a delay of one eighth of a time period. Thus, the output at PW is either zero, when large negative numbers cause gate 644 to be disabled, or a pulse from one to eight and seven/eighths time period in length, with one eighth time period resolution.

The PW signal is still expressed in two's complement notation, and must therefore be converted to sign magnitude data for negative numbers. Gates 649 and 650 are utilized to generate complementary sign magnitude, pulse width modulated signals. The positive numbers are generated by gate 650 (YLATCHSN equal zero) with PW and WINDOW, to eliminate the PULGEN pulses. PW is inverted to effectively convert negative numbers (YLATCHSN equal one) to sign magnitude data through gate 649.

The two pulsewidth modulated values SPK1 and SPK2 are then applied to a push/pull output circuit 651. Circuit 651 is utilized since it possesses no DC power component, and will effectively drive speaker 18.

TABLE I

| Equation | Stage |
|---|---|
| $Y_{10}(i)=Y_{11}(i)-K_{10}b_{10}(i-1)$ | 10 |
| $Y_9(i)=Y_{10}(i)-K_9b_9(i-1)$ | 9 |
| $b_{10}(i)=b_9(i-1)+K_9Y_9(i)$ | 9 |
| $Y_8(i)=Y_9(i)-K_8b_8(i-1)$ | 8 |
| $b_9(i)=b_8(i-1)+K_8Y_8(i)$ | 8 |
| $Y_7(i)=Y_8(i)-K_7b_7(i-1)$ | 7 |
| $b_8(i)=b_7(i-1)+K_7Y_7(i)$ | 7 |
| $Y_6(i)=Y_7(i)-K_6b_6(i-1)$ | 6 |
| $b_7(i)=b_6(i-1)+K_6Y_6(i)$ | 6 |
| $Y_5(i)=Y_6(i)-K_5b_5(i-1)$ | 5 |
| $b_6(i)=b_5(i-1)+K_5Y_5(i)$ | 5 |
| $Y_4(i)=Y_5(i)-K_4b_4(i-1)$ | 4 |
| $b_5(i)=b_4(i-1)+K_4Y_4(i)$ | 4 |
| $Y_3(i)=Y_4(i)-K_3b_3(i-1)$ | 3 |
| $b_4(i)=b_3(i-1)+K_3Y_3(i)$ | 3 |
| $Y_2(i)=Y_3(i)-K_2b_2(i-1)$ | 2 |
| $b_3(i)=b_2(i-1)+K_2Y_2(i)$ | 2 |
| $Y_1(i)=Y_2(i)-K_1b_1(i-1)$ | 1 |
| $b_2(i)=b_1(i-1)+K_1Y_1(i)$ | 1 |
| $b_1(i)=Y_1(i)$ | |

## Claims

1. A speech synthesis system comprising:
—input means (22—Figure 2a) for receiving frames of speech data, said frames of speech data comprising binary representations of speech-determinative data, wherein each said frame of speech data is defined by a binary representation including pitch data, energy data, and filter coefficient data,
—interpolation means (50—Figure 2b) coupled to said input means for interpolating between adjacent frames of said speech data,
—synthesizer means (50, 52, 54, 56, 58—Figure 2b) coupled to said input means and to said interpolation means for selectively converting said speech data and interpolated values thereof into signals representative of human speech, and
—means (64, 18—Figure 2b) coupled to said synthesizer means for producing audible sound characterized in that said frames of speech data as received by said input means include coded frame rate data indicative of a variable time interval between the start of a current frame of speech data and the start of the next successive frame of speech data, and by decoding means (48—Figure 2a) coupled to said input means for decoding said frame rate data, said interpolation means being also coupled to said decoding means for providing a variable number of interpolation calculations to define interpolated speech values between adjacent frames of speech data from last implemented speech data in which the number of interpolation calculations and the time interval between the respective starts of adjacent frames of speech data in a given instance are determined by said frame rate data such that successive frames of speech data as respectively defined by a binary representation including pitch data, energy data, and filter coefficient data are sequentially delivered to said input means with a time interval therebetween which varies in accordance with the decoder value of said coded frame rate data accompanying the speech-determinative data of each speech data frame.

2. A speech synthesis system as set forth in claim 1, further characterized by frame control means (30—Figure 2a) coupled to said decoding means and said input means for controlling the rate at which new frames of speech data are provided to said input means.

3. A speech synthesis system as set forth in claim 2, further characterized in that said frame control means is effective for controlling the rate at which new frames of speech data are received by said input means in response to frame rate data included in a current frame of speech data, the time interval between the receipt of successive new frames of speech data by said input means being variable and being determined by said frame rate data.

4. A speech synthesis system as set forth in either of claims 2 or 3, further characterized in that said interpolation means, is also coupled to said frame control means and is responsive to said frame rate data for providing the variable number of interpolation calculations between adjacent frames of speech data.

5. A speech synthesis system as set forth in any preceding claim, further characterized by memory means (12—Figure 1b) for storing selectable speech data, and controller means (14—Figure 1b) operably associated with said memory means for controlling the selective accessing of said speech data from said memory means, said input means being coupled to said memory means for receiving selected frames of speech data as accessed under control of said controller means.

6. A speech synthesis system as set forth in claim 5, further characterized by switch means (16—Figure 1b) operably associated with said controller means and responsive to operator commands, said controller means being responsive to said switch means for controlling the selective accessing of said speech data from said memory means in accordance with said operator commands.

7. A speech synthesis system as set forth in claim 6, further characterized in that said switch means comprises a keyboard having a plurality of operator actuatable key switches.

8. A speech synthesis system as set forth in any preceding claim, further characterized in that said variable number of interpolation calculations is 2×n where n is an integer less than one hundred.

9. A speech synthesis system as set forth in any preceding claim, further characterized in that said speech synthesis system comprises a portable learning aid.

10. A speech synthesis system as set forth in any of claims 1 to 8, further characterized in that said speech synthesis system comprises a portable calculator device.

11. A speech synthesis system as set forth in any of claims 1 to 8, further characterized in that said speech synthesis system comprises a portable language translator device.

12. A speech synthesis system as set forth in any preceding claim, further characterized in that said synthesizer means is effective for selectively converting said speech data into digital signals representative of human speech, and said means for producing audible sound comprising digital to analog converter means (64—Figure 2b) coupled to said synthesizer means for converting said digital signals representative of human speech into analog signals, and audio means (18—Figure 2b) coupled to said converter means for converting said analog signals into audible sound.

13. A speech synthesis system as set forth in claim 12, further characterized in that said audio means comprises a speaker.

14. A speech synthesis system as set forth in claim 12, further characterized in that said audio means includes amplifier means coupled to a speaker.

**Patentansprüche**

1. Sprachsynthesesystem mit
—Eingangsmitteln (22—Fig. 2a) für den Empfang von Sprachdatenrahmen, die aus binären Darstellungen sprachbestimmender Daten bestehen, wobei jeder Rahmen der Sprachdaten durch eine binäre Darstellung mit Tonhöhendaten, Energiedaten und Filterkoeffizientendaten definiert ist,
—Interpolationsmitteln (50—Fig. 2b), die mit den Eingangsmitteln gekoppelt sind und dem Interpolieren zwischen benachbarten Rahmen der Sprachdaten dienen,
—Synthesizermitteln (50, 52, 54, 56, 58—Fig. 2b), die mit den Eingangsmitteln und den Interpolationsmitteln gekoppelt sind und die Sprachdaten sowie deren interpolierte Werte selektiv in Signale umsetzen, die menschliche Sprache präsentieren, und
—Mitteln (64, 18—Fig. 2b), die mit den Synthesizermitteln gekoppelt sind und hörbare Töne erzeugen, dadurch gekennzeichnet, daß die Sprachrahmendaten, wie sie von den Eingangsmitteln empfangen werden, codierte Rahmenratendaten enthalten, die ein variables Zeitintervall zwischen dem Beginn eines gerade vorliegenden Sprachdatenrahmens und dem Beginn des nächstfolgenden Sprachdatenrahmens angeben, wobei Decodiermittel (48—Fig. 2a) vorgesehen sind, die mit den Eingabemitteln gekoppelt sind und die Rahmenratendaten decodieren, wobei die Interpolationsmittel ebenfalls mit den Decodiermitteln verbunden sind, damit eine variable Anzahl von Interpolationsberechnungen zur Definition interpolierter Sprachwerte zwischen benachbarten Sprachdatenrahmen aus zuletzt erzeugten Sprachdaten definiert werden, bei denen die Anzahl der Interpolationsberechnungen und daz Zeitintervall zwischen den jeweiligen Anfängen benachbarter Sprachdatenrahmen in einem gegebenen Zeitpunkt durch die Sprachratendaten so bestimmt werden, daß aufeinanderfolgende Sprachdatenrahmen, die jeweils durch eine binäre Darstellung durch Tonhöhendaten, Energiedaten und Filterkoeffizientendaten definiert sind, nacheinander an die Eingabemittel mit einem dazwischenliegenden Zeitintervall geliefert werden, das sich entsprechend dem codierten Wert der Rahmenratendaten verändert, die die sprachbestimmenden Daten jedes Sprachdatenrahmens leiten.

2. Sprachsynthesesystem nach Anspruch 1, gekennzeichnet durch Rahmensteuermittel (30—Fig. 2a), die mit den Decodiermitteln und den Eingangsmitteln verbunden sind und die Rate steuern, mit der neue Sprachdatenrahmen an die Eingangsmittel geliefert werden.

3. Sprachsynthesesystem nach Anspruch 2, dadurch gekennzeichnet, daß die Rahmensteuermittel die

EP 0 164 677 B1

Rate, mit der neue Sprachdatenrahmen von den Eingangsmitteln empfangen werden, in Abhängigkeit von den Rahmenratendaten steuern, die in einem gerade vorliegenden Sprachdatenrahmen enthalten sind, sowei das Zeitintervall zwischen dem Empfang aufeinanderfolgender neuer Sprachdatenrahen durch die Eingangsmittel veränderlich ist und von den Rahmenratendaten bestimmt wird.

4. Sprachsynthesesystem nach Anspruch 2 oder 3, dadurch gekennzeichnet, daß die Interpolationsmittel ebenfalls mit den Rahmensteuermitteln verbunden sind und abhängig von den Rahmenratendaten die variable Anzahl der Interpolationsberechnungen zwischen benachbarten Sprachdatenrahmen liefern.

5. Sprachsynthesesystem nach einem der vorhergehenden Ansprüche, gekennzeichnet durch Speichermittel (12—Fig. 1b) zum Speichern auswählbarer Sprachdaten und Steuermitteln (14—Fig. 1b), die den Speichermitteln wirkungsmäßig zugeordnet sind und den selektiven Zugriff auf die Sprachdaten aus den Speichermitteln steuern, wobei die Eingangsmittel mit den Speichermitteln gekoppelt sind, damit sie ausgewählte Sprachdatenrahmen entsprechend dem Zugriff unter der Steuerung durch die Steuermittel empfangen.

6. Sprachsynthesesystem nach Anspruch 5, gekennzeichnet durch Schaltermittel (16—Fig. 1b), die den Steuermitteln wirkungsmäßig zugeordnet sind und abhängig von Bedienerbefehlen arbeiten, wobei die Steuermittel in Abhängigkeit von den Schaltermitteln das selektive Umgreifen auf die Sprachdaten aus den Speichermitteln gemäß den Bedienerbefehlen steuern.

7. Sprachsynthesesystem nach Anspruch 6, dadurch gekennzeichnet, daß die Schaltermittel aus einer Tastatur bestehen, die mehrere von einem Bediener betätigbare Tastenschalter aufweist.

8. Sprachsynthesesystem nach einem der vorhergehenden Ansprüche, dadurch gekennzeichnet, daß die variable Anzahl von Interpolationsberechnungen 2×n beträgt, wobei n eine ganze Zahl kleiner als Hundert ist.

9. Sprachsynthesesystem nach einem der vorhergehenden Ansprüche, dadurch gekennzeichnet, daß das Sprachsynthesesystem eine tragbare Lernhilfe ist.

10. Sprachsynthesesystem nach einem der Ansprüche 1 bis 8, dadurch gekennzeichnet, daß das Sprachsynthesesystem ein tragbares Rechengerät ist.

11. Sprachsynthesesystem nach einem der Ansprüche 1 bis 8, dadurch gekennzeichnet, daß das Sprachsynthesesystem ein tragbares Sprachübersetzungsgerät ist.

12. Sprachsynthesesystem nach einem der vorhergehenden Ansprüche, dadurch gekennzeichnet, daß die Synthesizermittel die Sprachdaten selektiv in digitale Signale umsetzen, die menschliche Sprache repräsentieren, und daß die Mittel zum Erzeugen hörbarer Töne Digital-Analog-Umsetzermittel (64—Fig. 2b) sind, die mit den Synthesizermitteln verbunden sind und die menschliche Sprache repräsentierenden digitalen Signale in analoge Signale umsetzen, wobei Tonmittel (18—Fig. 2b) mit den Umsetzermitteln zum Umsetzen der analogen Signale in hörbare Töne verbunden sind.

13. Sprachsynthesesystem ·nach Anspruch 12, dadurch gekennzeichnet, daß die Tonmittel einen Lautsprecher umfassen.

14. Sprachsynthesesystem nach Anspruch 12, dadurch gekennzeichnet, daß die Tonmittel einen mit dem Lautsprecher verbundenen Verstärker enthalten.

**Revendications**

1. Système de synthèse de la parole comportant:
—des moyens d'entrée (22-figure 2a) pour recevoir des trames de données de parole, lesdites trames de données de parole consistant en des représentations binaires de données déterminant la parole, dans lesquelles chacune desdites trames de données de parole est définie par une représentation binaire comprenant des données de hauteur, des données d'énergie et est données de coefficients de filtre,
—des moyens d'interpolation (50-figure 2b) couplés avec lesdits moyens d'entrée pour l'interpolation entre des trames voisines desdites données de parole,
—des moyens de synthétiseur (50, 52, 54, 56, 58-figure 2b) couplés avec lesdits moyens d'entrée et lesdits moyens d'interpolation pour convertir sélectivement lesdites données de parole et leurs valeurs interpolées en des signaux représentant la parole humaine, et
—des moyens (64, 18-figure 2b) couplés avec lesdits moyens de synthétiseur pour produire un son audible
caractérisé en ce que lesdites trames de données de parole, telles que reçues par lesdits moyens d'entrée, comprennent des données de fréquence de trames codées indiquant un intervalle de temps variable entre le début d'une trame en cours des données de parole et le début de la trame qui suit immédiatement des données de parole, et par des moyens de décodage (48-figure 2a) couplés aves lesdits moyens d'entrée pour décoder lesdites données de fréquence en trame, lesdits moyens d'interpolation étant également couplés aves lesdits moyens de décodage pour produire un nombre variable de calculs d'interpolation pour définir des valeurs de parole interpolées entre les trames voisines des données de parole, à partir des dernières données de parole réalisées dans lesquelles le nombre des calculs d'interpolation et l'intervalle de temps entre les débuts respectifs de trames voisines des données de parole dans un cas donné sont déterminés par lesdites données de fréquence de trame de manière que des trames successives de données de parole telles que définies respectivement par une représentation binaire comprenant des données de hauteur, des données d'énergie et des données de coefficients de filtre soient délivrées séquentiellement auxdits moyens d'entrée avec un intervalle de temps entre elles qui varie en fonction de la valeur décodée desdites données de fréquence de trame codées accompagnant les données de détermination de parole de chaque trame de données de parole.

2. Système de synthèse de parole selon la revendication 1, caractérisé en outre par des moyens de commande de trame (30-figure 2a) couplés avec lesdits moyens de décodage et lesdits moyens d'entrée pour commander la fréquence à laquelle des nouvelles trames de données de parole sont produits pour lesdits moyens d'entrée.

3. Système de synthèse de parole selon la revendication 2, caractérisé en outre en ce que lesdits moyens de commande de trame ont pour fonction de commander la fréquence à laquelle des nouvelles trames des données de parole sont reçues par lesdits moyens d'entrée en réponse aux données de fréquence de trames incluses dans une trame en cours de données de parole, l'intervalle de temps entre la réception de nouvelles trames successives de données de parole par lesdits moyens d'entrée étant variable étant déterminé par lesdites données de fréquence de trame.

4. Système de synthèse de parole selon la revendication 2 ou 3, caractérisé en outre en ce que lesdits moyens d'interpolation sont également couplés avec lesdits moyens de commande de trame et réagissent auxdites données de fréquence de trame en produisant le nombre variable de calcul d'interpolation entre des trames voisines de données de parole.

5. Système de synthèse de parole selon l'une quelconque des revendications précédentes, caractérisé en outre par des moyens de mémoire (12-figure 1b) pour mémoriser des données de parole pouvant être sélectionnées et des moyens de commande (14-figure 1b) associés en fonctionnement avec lesdits moyens de mémoire pour commander l'accès sélectif desdites données de parole dans lesdits moyens de mémoire, lesdits moyens d'entrée étant couplés avec lesdits moyens de mémoire pour recevoir des trames sélectionnées de données de parole, accédées à la commande desdits moyens de commande.

6. Système de synthèse de parole selon la revendication 5, caractérisé en outre par des moyens de commutation (16-figure 1b) associés en fonctionnement avec lesdits moyens de commande et réagissant à des commandes de l'opérateur, lesdits moyens de commande réagissant auxdits moyens de commutation en commandant l'accès sélectif desdites données de parole dans lesdits moyens de mémoire en fonction desdites commandes de l'opérateur.

7. Système de synthèse de parole selon la revendication 6, caractérisé en outre en ce que lesdits moyens de commutation comprennent un clavier avec plusieurs commutateurs à touches pouvant être actionnés par un opérateur.

8. Système de synthèse de parole selon l'une quelconque des revendications précédentes, caractérisé en outre en ce que ledit nombre variable des calculs d'interpolation est $2 \times n$, où n est un entier inférieur à cent.

9. Système de synthèse de parole selon l'une quelconque des revendications précédentes, caractérisé en outre en ce que ledit système de synthèse de parole consiste en une aide portative à l'enseignement.

10. Système de synthèse de parole selon l'une quelconque des revendications 1 à 8, caractérisé en outre en ce que ledit système de synthèse de parole consiste en un dispositif calculateur portatif.

11. Système de synthèse de parole selon l'une quelconque des revendications 1 à 8, caractérisé en outre en ce que ledit système de synthèse de parole consiste en un dispositif portatif de traduction de langage.

12. Système de synthèse de la parole selon l'une quelconque des revendications précédentes, caractérisé en outre en ce que lesdits moyens synthétiseurs ont pour fonction de convertir sélectivement lesdites données de parole en des signaux numériques représentant une parole humaine, et lesdits moyens de production de son audible consistant en des moyens de convertisseur numérique-analogique (64-figure 2b) couplés avec lesdits moyens synthétiseurs pour convertir lesdits signaux numériques représentant une parole humaine en des signaux analogiques, et des moyens de son (18-figure 2b) couplés avec lesdits moyens convertisseurs pour convertir lesdits signaux analogiques en un son audible.

13. Système de synthèse de parole selon la revendication 12, caractérisé en outre en ce que lesdits moyens de son comprennent en un haut-parleur.

14. Système de synthèse de la parole selon la revendication 12, caractérisé en outre en ce que lesdits moyens de son comprennent des moyens d'amplificateur couplés avec un haut-parleur.

Fig. la

| KEYBOARD 16 | → | MICROPROCESSOR 14 | ↔ | SYNTHESIZER 10 | ↔ | DATA ROM 12 |

18 SPEAKER

Fig. lb

1

## Fig.2a

PARAMETER
INPUT

ARRAY
MULTIPLIER/
INTERPOLATOR
50

RECODING
LOGIC
52

FILTER ADDER
54

B STACK
PPC/YLATCH REG
56

MULTIPLEXOR
58

*Fig.2b*

PPC/YLATCH
EXCITATION/SCALE SR
66

MULTIPLEX
70

IC COUNT

D/A CONV
64

18

EXCITATION/
SCALE ROM
78

ADDRESS
REG
72

U/V ADDR CEN
76

RES
80

RES
CONT
32

Fig. 3

Fig. 4

TO FRAME CONTROL
PLA 30

EP 0 164 677 B1

Fig. 5

Fig. 6a

## Fig. 6b

Fig.7

Fig. 8a

Fig.8b

*Fig.9ab*

*Fig.9aa*

BETWEEN 4TH AND 5TH CELLS
AND
8TH AND 9TH CELLS
ADDITIONAL BUFFERING

NOTE A

Fig. 9ac

Fig. 9ba

EP 0 164 677 B1

Fig. 9bc

Fig. 9bb

# Fig. 9ca

EP 0 164 677 B1

*Fig. 9cb*

16

## Fig. 9cc

*Fig. 9da*

EP 0 164 677 B1

Fig.9db

Fig. 10a

*Fig.10b*

*Fig.10c*

PRECHG φ4
DISCHG φ2

MR12D

MRSND

T17

(REC50)

PRECHG φ3
DISCHG φ1

$\overline{+1_7}$

$\overline{-1_7}$

$\overline{-2_7}$

$\overline{+2_7}$

$\overline{T18}$

T18

| MR4 | 1 BIT DEL | MR4D |
| MR5 | 1 BIT DEL | MR5D |
| MR6 | 2 BIT DEL | MR6D |
| MR7 | 3 BIT DEL | MR7D |
| MR8 | 3 BIT DEL | MR8D |
| MR9 | 3 BIT DEL | MR9D |
| MR10 | 4 BIT DEL | MR10D |
| MR11 | 4 BIT DEL | MR11D |
| MR12 | 5 BIT DEL | MR12D |
| MRSN | 5 BIT DEL | MRSND |

1 BIT DELAY

PITCH 9
(SN)
MULT 13
(SN)
PITCH 8
MULT 12
PITCH 7
MULT 11
PITCH 6
MULT 11
PITCH 5
MULT 9
PITCH 4
MULT 8
PITCH 3
MULT 7
PITCH 2
MULT 6
PITCH 1
MULT 5

TO FIG 11B

*Fig. 11a*

Fig. llb

Fig.12a

Fig. 12b

VSS

PPC LATCH
YLATCH

ΣOUT

φ3
T8
T8
Z PITCH
T9
T9
VDD
YLATCH
PCC
T18
T18
T7
T7
T17
b1
T17
T14
b4
T14
T11
b7
T11
T10

TO FIG 12A

26

Fig. 13a

*Fig.13b*

MULTIPLEXER

OFF DURING PRECHARGE

PPC/YLATCH/
EXCITATION/SCALE REGISTER 66

EP 0 164 677 B1

Fig.14a

Fig.14b